(19) Europäisches Patentamt
European Patent Office
Office européen des brevets

(11) **EP 2 767 149 B1**

## (12) EUROPÄISCHE PATENTSCHRIFT

(45) Veröffentlichungstag und Bekanntmachung des Hinweises auf die Patenterteilung:
**18.05.2016 Patentblatt 2016/20**

(51) Int Cl.:
**A01C 17/00** *(2006.01)*          **A01C 21/00** *(2006.01)*

(21) Anmeldenummer: **14000143.9**

(22) Anmeldetag: **15.01.2014**

(54) **Verfahren zur Regelung des Massenstromes an Streugut bei einem Scheibenstreuer**

Method for controlling the mass flow rate of granulate fertilizer in a disc spreader

Procédé de régulation du débit massique de produits d'épandage dans un épandeur à disque

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2013 DE 102013002393**

(43) Veröffentlichungstag der Anmeldung:
**20.08.2014 Patentblatt 2014/34**

(73) Patentinhaber: **RAUCH Landmaschinenfabrik GmbH
76547 Sinzheim (DE)**

(72) Erfinder: **Michael Linz
77815 Bühl (DE)**

(74) Vertreter: **Lichti - Patentanwälte Partnerschaft mbB
Postfach 41 07 60
76207 Karlsruhe (DE)**

(56) Entgegenhaltungen:
**EP-A1- 0 963 690      DE-A1- 19 825 917
DE-U1- 29 824 947      DE-U1- 29 924 512**

**EP 2 767 149 B1**

**Beschreibung**

Die Erfindung betrifft ein Verfahren zur Regelung des Ist-Massenstromes an Streugut wenigstens eines regelbaren Dosierorgans eines Scheibenstreuers mit wenigstens einer, dem Dosierorgan zugeordneten Verteilerscheibe, wobei ein Soll-Massenstrom an Streugut in Abhängigkeit wenigstens eines Parameters aus der Gruppe

- aktuelle Fahrgeschwindigkeit des Scheibenstreuers;
- Soll-Streumenge pro Fläche; und
- Arbeitsbreite

ermittelt und dieser Soll-Massenstrom einem rechnergestützten Regelgerät als Führungsgröße eingegeben wird, wobei dem Regelgerät ferner einerseits wenigstens eine sensorisch ermittelte, für den Ist-Massenstrom repräsentative Regelgröße aus der Gruppe

- Drehmoment wenigstens einer Welle in einem Antriebsstrang der Verteilerscheibe;
- Torsion wenigstens einer Welle in einem Antriebsstrang der Verteilerscheibe;
- Druckdifferenz eines zum Antrieb der Verteilerscheibe dienenden Hydromotors; und
- Stromaufnahme eines zum Antrieb der Verteilerscheibe dienenden Elektromotors

und andererseits die sensorisch ermittelte Ist-Drehzahl der Verteilerscheibe oder wenigstens einer Welle im Antriebsstrang derselben eingegeben wird, woraufhin in einem Regelmodus des Regelgerätes die Abweichung des Ist-Massenstromes an Streugut von dem Soll-Massenstrom an Streugut ermittelt und in Abhängigkeit der Ist-Drehzahl der Verteilerscheibe oder der Welle im Antriebsstrang derselben eine für die Öffnungsstellung des Dosierorgans repräsentative Stellgröße generiert wird, um das Dosierorgan auf den Soll-Massenstrom nachzuregeln.

Die Erfindung bezieht sich ferner auf einen Scheibenstreuer mit wenigstens einer Verteilerscheibe, welche von einem Antriebsstrang eines Antriebs in Rotation versetzbar ist, und mit wenigstens einem von einem rechnergesteuerten Regelgerät regelbaren Dosierorgan.

Derartige Scheibenstreuer finden insbesondere in Form von Zweischeiben-Düngerstreuern in der Landwirtschaft zur Verteilung von Streugut, wie mineralischen oder organischen Dünger und dergleichen, aber auch in Form von Winterdienststreuern zur Verteilung von Streusalz und/oder Splitt verbreiteten Einsatz. Ihre Vorteile liegen dabei vornehmlich in ihrer einfachen Bedienbarkeit und hohen Leistungsfähigkeit bei verhältnismäßig geringen Investitionskosten.

Um für die gewünschte Verteilung des Streugutes auf dem Boden zu sorgen, lassen sich bei gattungsgemäßen Scheibenstreuern einerseits die Dosierung des Massenstromes des Streugutes auf die einem jeweiligen Dosierorgan zugeordnete Verteilerscheibe, andererseits die Verteilung des Streugutes durch die Verteilerscheibe(n) einstellen bzw. regeln. Für letzteres ist es üblich, Einstellmittel zum Einstellen des Scheibenstreuers auf verschiedene Arbeitsbreiten, Streugüter und/oder Verteilarten vorzusehen. In Bezug auf die erstgenannte Dosierung des Streugutes hat es sich bewährt, dass ein rechnergestütztes Regelgerät einen Soll-Massenstrom an zu verteilendem Streugut aus einem oder insbesondere mehreren wählbaren Parametern, wie der aktuellen Fahrgeschwindigkeit, der Soll-Streumenge pro Flächeneinheit, der gewünschten Arbeitsbreite etc., ermittelt und das Dosierorgan gemäß dem derart ermittelten Soll-Massenstrom regelt, was insbesondere anhand wenigstens einer oder mehrerer in dem Rechner hinterlegten Kennlinien geschehen kann, welche die Korrelation des jeweiligen Parameters mit dem zugehörigen Massenstrom an Streugut beschreiben (DE 198 25 917 A1, EP 0 963 690 A1). In diesem Zusammenhang sei darauf hingewiesen, dass der Begriff "Kennlinie" nicht notwendigerweise eine Gerade betrifft, sondern eine praktisch beliebige funktionale Abhängigkeit, welche selbstverständlich auch in Form einer Kurve implementiert sein kann.

Darüber hinaus ist es bekannt, anstelle von Kennlinien sogenannte Kennfelder zu verwenden, welche in dem Rechner bzw. in einer mit diesem in Verbindung stehenden Datenbank abgespeichert sind und z.B. eine Vielzahl von Wertegruppen umfassen, welche die Abhängigkeit der für die Ist-Massenstrom repräsentativen Regelgröße (wie dem sensorisch erfassten Drehmoment einer Welle im Antriebsstrang der Verteilerscheibe bzw. deren Torsion oder - im Falle eines hydraulischen Antriebs der Verteilerscheibe - gegebenenfalls auch der Druckdifferenz eines zum Antrieb der Verteilerscheibe dienenden Hydromotors oder - im Falle eines elektrischen Antriebs der Verteilerscheibe - gegebenenfalls auch die Stromaufnahme eines zum Antrieb der Verteilerscheibe dienenden Elektromotors) von dem Massenstrom für unterschiedliche Drehzahlen der Verteilerscheibe wiedergeben (EP 0 945 548 A2, EP 1 008 288 A1).

Überdies können von dem jeweiligen Streugut abhängige physikalische Eigenschaften, welche insbesondere dessen Fließ- bzw. Rieselverhalten beschreiben und als sogenannte "Fließfaktoren" bezeichnet werden, als weitere Parameter eingegeben werden, wobei ein solcher Fließfaktor die Korrelation zwischen dem Massenstrom und der vom Fließverhalten des Streugutes abhängigen Aktuatorposition bei der Dosierung beschreibt. Hierdurch ist es insbesondere zu Beginn der Streuarbeit möglich, die Kennlinien, welche die genannten, wählbaren Parameter mit dem hieraus zu bestimmenden Soll-Massenstrom korrelieren, unter Berücksichtigung der Fließeigenschaften des verwendeten Streugutes mit einer noch höheren Genauigkeit festzulegen.

Was die Streugutdosierung betrifft, so haben sich insbesondere zwei verschiedene Varianten zur Messung und Regelung des Ist-Massenstromes an Streugut durchgesetzt:

Gemäß einer ersten Variante zur Messung und Regelung des auf die Verteilerscheibe aufgegebenen Ist-Massenstromes an Streugut wird der gesamte Streugutbehälter des Scheibenstreuers fortwährend, d.h. auch während der Fahrt, mittels Wiegezellen gewogen, so dass sich aus dem pro Zeiteinheit ermittelten Gewichtsverlust der tatsächliche Massenstrom des Streugutes errechnen lässt (EP 0 982 571 A1). Von Vorteil ist hierbei insbesondere die universelle Verwendbarkeit einer solchen Messanordnung unabhängig von einem hydraulischen oder mechanischen Antrieb der Verteilerscheibe. Als nachteilig hat sich indes einerseits erwiesen, dass mit einer solchen Wiegetechnik nur der gesamte Massenstrom an Streugut ermittelt werden kann, was es im Falle eines Zweischeibenstreuers, bei welchem die Verteilerscheiben häufig mit unterschiedlichen Massenströmen an Streugut beaufschlagt werden müssen (sofern z.B. eine unterschiedliche Streubreite auf beiden Seiten erwünscht ist), unmöglich macht, die einzelnen Massenströme (pro Verteilerscheibe) zu ermitteln. Andererseits ist das mit Wiegezellen ausgestattete System verhältnismäßig träge, weil die pro Zeiteinheit dosierte Masse des Streugutes im Verhältnis zu der Gesamtmasse des Streugutbehälters sehr klein ist und daher eine zeitlich relativ lange Mittelung der von den Wiegezellen ermittelten Messwerte erforderlich ist. Dies ist um so problematischer, je erschütterungsintensiver die Fahrt des Scheibenstreuers auf unebenem Untergrund vonstatten geht.

Gemäß einer zweiten Variante wird zur Messung und Regelung des Massenstromes an Streugut das für diesen Massenstrom repräsentative Drehmoment in einem Antriebsstrang eines Antriebs der bzw. einer jeden Verteilerscheibe ermittelt, welches sich daraus ergibt, dass das auf die Verteilerscheibe(n) auftreffende Streugut mittels deren Wurfschaufeln von der Scheibe fort beschleunigt wird. Die DE 198 25 917 A1 beschreibt einen gattungsgemäßen Schleuderstreuer zum Verteilen von Streugut mit variabler Arbeitsbreite und bei variabler Fahrzeuggeschwindigkeit, welcher einen Vorratsbehälter, eine oder zwei rotatorisch angetriebene Verteilerscheibe(n) mit Wurfschaufeln, Mitteln zum Einstellen des Streuers auf verschiedene Arbeitsbreiten und Düngersorten und ein verstellbares Dosierorgan aufweist, welches von einem rechnergestützten Regelgerät steuerbar ist. In den Rechner sind die Fahrgeschwindigkeit, die Sollstreumenge pro Fläche und die Arbeitsbreite eingebbar. Ferner sind in dem Rechner für jede Einstellung der Einstellmittel Kennlinien für die Beziehung zwischen dem Drehmoment der Verteilerscheibe und dem Massenstrom in Abhängigkeit von der Drehzahl einschließlich einer Leerlauf-Kennlinie für den Massenstrom null hinterlegt. Mittels je eines Sensors werden das Drehmoment und die Drehzahl des Rotationsantriebs aufgenommen. Die Ausgangsgröße des Drehmoment-Sensors vergrößert sich mit zunehmendem Ist-Massenstrom. Nach Abgleich mit dem Soll-Massenstrom unter gleichzeitiger Kompensation eventueller Drehzahlschwankungen wird die Abweichung als Stellgröße für das Dosierorgan genutzt. Während bei einem hydraulischen Antrieb der Verteilerscheibe(n) der Druckabfall des Hydromotors sensorisch ermittelt wird, wird bei einem elektrischen Antrieb der Verteilerscheibe(n) die Stromaufnahme des Elektromotors sensorisch erfasst. Im Falle eines mechanischen Antriebs der Verteilerscheibe(n) kommen Dehnungsmessstreifen und/oder Schleifkontakt zum Einsatz.

Die EP 0 963 690 A1, welche die Priorität der vorgenannten DE 198 25 917 A1 in Anspruch nimmt, beschreibt einen ähnlichen Schleuderstreuer, wobei zur Ermittlung des Drehmomentes der Verteilerscheiben im Falle eines mechanischen Antriebs derselben ferner zwei auf einer Querwelle, welche die jeweiligen, die Verteilerscheiben tragenden, vertikalen Wellen über Kegelzahnräder antreibt, mit Abstand angeordnete Inkrementalgeber vorgesehen sind, welchen Impulsaufnehmer zugeordnet sind, um die Torsion der Welle bzw. das hierfür repräsentative Drehmoment zu erfassen. Im Leerlauf, d.h. ohne Beaufschlagung der Verteilerscheiben bei geschlossenem Dosierorgan, ergibt sich folglich einerseits ein Maß für das Leerlaufdrehmoment, während andererseits im Falle einer Beaufschlagung der Verteilerscheiben mit einem Soll-Massenstrom an Streugut die Impulsaufnehmer eine Phasenverschiebung erkennen, welche für das Gesamtdrehmoment, welches aus der Subtraktion des Leerlaufdrehmomentes von dem Ist-Massenstrom-Drehmoment resultiert, repräsentativ ist. Um nur das tatsächlich durch den Massenstrom an Streugut, welcher auf die mit Wurfschaufeln ausgestattete Verteilerscheibe auftrifft, bedingte Drehmoment zu erfassen, können in regelmäßigen Zeitabständen - insbesondere dann, wenn der Scheibenstreuer im Vorgewende wendet und die Dosierorgane ohnehin geschlossen werden müssen - wiederholt Leerlauf-Drehmomentmessungen (bei geschlossenem Dosierorgan) durchgeführt werden, um mittels der oben erwähnten Subtraktionsmethode ein möglichst genaues, nur durch das Streugut verursachtes Drehmoment zu ermitteln.

Entsprechendes gilt für die aus der DE 101 54 737 C1 bekannte Einrichtung zur Erfassung des Drehmomentes in einem Antriebsstrang der Verteilerscheiben eines Scheibenstreuers, welche die sensorische Messung an einem verjüngten Abschnitt der die Verteilerscheiben über Kegelzahnräder antreibenden Querwelle vorsieht, um die Torsion unter Last bzw. die Messgenauigkeit zu erhöhen. Indes ergibt sich hierdurch keine signifikant verbesserte Messgenauigkeit und vermag das System insbesondere kleine Massenströme (bzw. kleine, hierdurch verursachte Biegemomente) nicht hinreichend zu erfassen, weil der verjüngte Wellenabschnitt in verstärktem Maße in Schwingungen gerät. Zudem ist eine Überlastsicherung in Form eines die entgegengesetzten Enden des verjüngten Wellenabschnittes verbindenden Tragrohres erforderlich, um die vornehmlich beim Einschalten des Antriebs auftretenden Maximalwerte des Drehmomentes aufzunehmen und den verjüngten Wellenabschnitt vor Schaden zu bewahren.

**EP 2 767 149 B1**

Die zum Prioritätsdatum der vorliegenden Patentanmeldung noch nicht veröffentlichte DE 10 2012 002 585 A1 beschreibt ein ähnliches Verfahren zur Regelung des Ist-Massenstroms eines gattungsgemäßen Scheibenstreuers, bei welchem als für den Ist-Massenstrom repräsentative Regelgröße die aufgrund des einwirkenden Drehmomentes bewirkte Torsion der die Verteilerscheibe tragenden Welle herangezogen wird, wobei die Torsion insbesondere mittels eines berührungsfreien Sensors, wie eines Fluxgate-Magnetometers, erfasst wird.

Während sich das vorstehend beschriebene Verfahren zur Regelung des Massenstromes bei mit Verteilerscheiben ausgestatteten Ein- und Zweischeibenstreuern bewährt hat, besteht ein Nachteil darin, dass die für den Ist-Massenstrom repräsentative Regelgröße stark von der Drehzahl der Verteilerscheibe abhängt, und zwar unabhängig davon, ob als Regelgröße das sensorisch ermittelte Drehmoment oder die Torsion einer Welle in dem Antriebsstrang der Verteilerscheibe, die Druckdifferenz eines zum Antrieb der Verteilerscheibe dienenden Hydromotors oder die Stromaufnahme eines zum Antrieb der Verteilerscheibe dienenden Elektromotors herangezogen wird. Dies hängt vornehmlich damit zusammen, dass die durch das auf die mit Wurfschaufeln bestückte Verteilerscheibe auftreffende Streugut bedingte Last in aller Regel klein gegenüber derjenigen Last ist, welche bei einer Veränderung der Drehzahl der Verteilerscheibe auftritt und welche insbesondere Trägheitskräfte umfasst. Bei bekannten Regelgeräten gemäß dem Stand der Technik wird davon ausgegangen, dass die Antriebsdrehzahl der Verteilerscheibe zwar entsprechend der gewünschten Drehzahl, die beispielsweise zum Erreichen der gewünschten Arbeitsbreite geeignet ist, eingestellt werden kann, aber während des Streuvorgangs konstant gehalten wird. Dies ist im Falle eines hydraulischen oder elektrischen Antriebs der Verteilerscheibe auch weitgehend möglich, wobei das Regelgerät insoweit auch die Funktion der Drehzahlregelung übernehmen kann. Gleichwohl kann es auch bei den genannten Antriebsarten der Verteilerscheibe zu Lastschwankungen kommen, welche in einer Veränderung der Drehzahl resultieren und welche beispielweise durch Veränderungen des Widerstandes in dem Antriebsstrang der Verteilerscheibe (z.B. infolge temperaturabhängiger Ölviskosität, Lagerwiderständen und/oder Eigenspannungen) bedingt sein können. Periodische Leerlaufmessungen bei unbelasteter Verteilerscheibe (das Dosierorgan ist geschlossen) der oben genannten Art vermögen solche Wirkungen zwar zumeist weitgehend auszugleichen, doch können gleichwohl Ungenauigkeiten im Falle von Drehzahländerungen auftreten. Besonders problematisch ist dies jedoch im Falle eines mechanischen Antriebs der Verteilerscheibe, bei welchem ein Kopplungselement des Antriebsstrangs der Verteilerscheibe mit der Zapfwelle einer Zugmaschine, wie eines Traktors, verbunden wird, um die Verteilerscheibe in Rotation zu versetzen. In diesem Fall vermag das Regelgerät nicht in die Steuerung der Drehzahl der Verteilerscheibe einzugreifen und lässt sich diese folglich während der Streuarbeit nicht konstant halten. Vielmehr wird der mechanische Antrieb (seitens der Zugmaschine) während der Streuarbeit erfahrungsgemäß häufig - sei es gewollt oder ungewollt - beschleunigt oder verlangsamt, wie beispielsweise infolge einer Anpassung der Fahrtgeschwindigkeit bei der Fahrt vom Feld in das Vorgewende bzw. aus dem Vorgewende in das Feld oder bei der Auf- bzw. Abwärtsfahrt am Hang. Folglich wirkt aufgrund Veränderung der Drehzahl der Verteilerscheibe ein zusätzliches, positives oder negatives Drehmoment auf den Antriebsstrang der Verteilerscheibe ein, welches das Regelgerät veranlasst, das Dosierorgan zu öffnen oder zu schließen, obgleich das tatsächlich nur durch das auf die Verteilerscheibe auftreffende Streugut bewirkte Drehmoment (welches, wie gesagt, demgegenüber klein ist) im Prinzip unverändert geblieben ist, was das Regelgerät freilich nicht "wissen" kann, da es von dem sensorisch erfassten Drehmoment bzw. der Torsion der Welle im Antriebsstrang der Verteilerscheibe ausgehen muss. Entsprechendes gilt für den Fall, wenn das Steuergerät einen mittels eines Drucksensors eines Hydraulikmotors oder mittels eines Stromsensors eines Elektromotors zum Antrieb der Verteilerscheibe Druck- oder Strom"sprung" empfängt, der gar nicht aus einer Veränderung des auf die Verteilerscheibe auftreffenden Massenstromes an Streugut, sondern vielmehr aus einer (unbeabsichtigten) temporären Veränderung der Drehzahl resultiert.

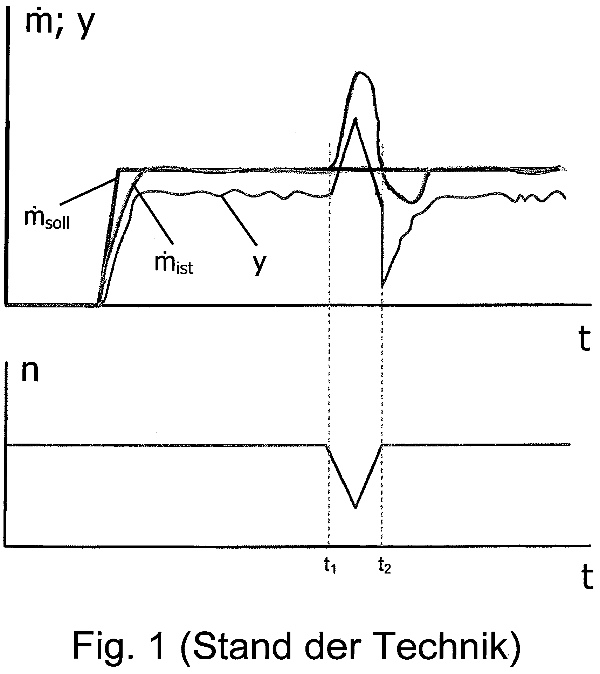

In Fig. 1 ist dieses Problem grafisch veranschaulicht. Die in Fig. 1 untere Kurve zeigt den Verlauf der Drehzahl n über die Zeit t während einer Phase der Streuarbeit. Die Drehzahl n ist hierbei weitgehend konstant, fällt jedoch zu einem Zeitpunkt $t_1$ ab, woraufhin sie wieder ansteigt, um zu einem Zeitpunkt $t_2$ wieder den gewünschten, konstanten Wert zu erreichen. Dies kann typischerweise der Fall sein, wenn die Verteilerscheibe des Scheibenstreuers einen mit der Zapfwelle der Zugmaschine gekoppelten, mechanischen Antrieb aufweist und der Landwirt in der Zugmaschine über eine Anhöhe hinweg fährt. Die in Fig. 1 oberen Kurven zeigen einerseits den Verlauf des Soll-Massenstromes $\dot{m}_{soll}$ als Führungsgröße über die Zeit t, welcher im vorliegenden Fall etwa konstant und dem Regelgerät in Abhängigkeit der Fahrgeschwindigkeit, der gewünschten Soll-Streumenge pro Fläche und der gewünschten Arbeitsbreite eingegeben worden ist. Andererseits zeigen die in Fig. 1 oberen Kurven den Verlauf der Stellgröße y, welche beispielsweise der Stellung des Aktuators eines Dosierschiebers des Dosierorgans entsprechen kann, sowie des Ist-Massenstromes $\dot{m}_{ist}$ als Regelgröße über die Zeit t (graue Kurve). Wie aus Fig. 1 ersichtlich, steigt die Stellgröße y zum Zeitpunkt $t_1$, an welchem die Drehzahl absinkt, stark an, da dem Regelgerät suggeriert wird, das auf die Welle in dem Antriebsstrang der Verteilerscheibe wirkende - durch den auf die Verteilerscheibe auftreffenden Massenstrom an Streugut - bewirkte Drehmoment sei stark abgefallen, woraufhin das Regelgerät die Stellgröße y hoch regelt, um durch Öffnen des Dosierorgans den vermeintlich zu geringen Massenstrom an Streugut zu kompensieren. Als Resultat steigt der Ist-Massenstrom $\dot{m}_{ist}$ als Regelgröße stark an und kommt es während der Drehzahländerung zu einer starken lokalen Überdüngung, die es sowohl aus Pflanzenschutz- als auch aus Umweltschutzgründen sowie nicht zuletzt aus wirtschaftlichen Gründen zu vermeiden gilt. Nachdem zum Zeitpunkt $t_2$ wieder eine konstante Drehzahl der Verteilerscheibe erreicht wird, regelt das Regelgerät die Stellgröße y und somit den Ist-Massenstrom $\dot{m}_{ist}$ als Regelgröße - nach einer gewissen, auf den Zeitpunkt $t_2$ folgenden Einregelphase, wieder wie vorgesehen. Entsprechend kommt es beispielsweise im Falle einer temporären Erhöhung der Drehzahl der Verteilerscheibe (nicht dargestellt) zu einer lokalen Unterdüngung, welche freilich ebenso vermieden werden sollte.

Entsprechende Probleme einer lokal übermäßigen oder zu geringen Dosierung des Streugutes können dann auftreten, wenn ein für die Regelung erforderliches minimales Signal-/ Rauschverhältnis der sensorisch erfassten Regelgröße (Drehmoment oder Torsion der in einem Antriebsstrang der Verteilerscheibe angeordneten Welle, Druckdifferenz eines Hydromotors zum Antrieb der Verteilerscheibe oder Stromdifferenz eines Elektromotors zum Antrieb der Verteilerscheibe) nicht gewährleistet werden kann, wie es insbesondere im Falle eines sehr klein gewählten Soll-Massenstromes als Führungsgröße der Fall sein kann. Auch hier kann es zu einem kontraproduktiven Öffnen bzw. Schließen und somit z.B. zu einer lokalen Über- bzw. Unterdüngung kommen, wenn das Regelgerät aufgrund vermeintlicher Ist-Massenströme, welche sich jedoch im Grundrauschen befinden, das Dosierorgan auf- bzw. zusteuert, obgleich hierzu in der Realität kein Anlass besteht. Letzteres Problem ist unabhängig vom jeweiligen Antrieb der Verteilerscheibe des Scheibenstreuers.

Der Erfindung liegt daher die Aufgabe zugrunde, ein gattungsgemäßes Verfahren zur Regelung des Ist-Massenstromes an Streugut bei einem Scheibenstreuer dahingehend weiterzubilden, dass es sowohl während gewollt oder ungewollt auftretender Drehzahländerungen der Verteilerscheibe als auch für den Fall, wenn das Regelgerät unterhalb eines Minimums des Signal-/Rauschverhältnisses liegende Regelgrößen empfängt, nicht oder zumindest in einem gegenüber dem Stand der Technik merklich geringerem Ausmaß zu einem übermäßigen bzw. zu geringen Austrag an Streugut kommt. Sie ist ferner auf einen zur Durchführung eines solchen Verfahrens geeigneten Scheibenstreuer der eingangs genannten Art gerichtet.

In verfahrenstechnischer Hinsicht wird diese Aufgabe bei einem Verfahren der eingangs genannten Art dadurch gelöst, dass

- während des Überschreitens eines, insbesondere vorherbestimmbaren, Maximalwertes von Änderungen der sensorisch ermittelten Drehzahl der Verteilerscheibe oder der Welle im Antriebsstrang derselben und/oder
- während des Unterschreitens eines, insbesondere vorherbestimmbaren, minimalen Signal-/Rauschverhältnisses der sensorisch ermittelten, für den Ist-Massenstrom repräsentativen Regelgröße

  das Regelgerät
- in einen Steuermodus versetzt wird oder
- einen Steuermodus eines Steuergerätes aktiviert,

  wobei im Steuermodus eine für die Öffnungsposition des Dosierorgans repräsentative Stellgröße unabhängig von der sensorisch ermittelten, für den Ist-Massenstrom repräsentative Regelgröße generiert wird, um das Dosierorgan der Verteilerscheibe unabhängig von dieser Regelgröße zu steuern.

Bei einem Scheibenstreuer der eingangs genannten Art sieht die Erfindung zur Lösung dieser Aufgabe ferner vor, dass das Regelgerät zur Durchführung eines Verfahrens der vorgenannten Art ausgebildet ist.

Die Erfindung sieht folglich zusätzlich zu der bekannten Regelung des Ist-Massenstromes an Streugut eine temporäre Steuerung des Ist-Massenstromes vor, welche dann an die Stelle der Regelung tritt, wenn während des Überschreitens eines Maximalwertes von Änderungen der sensorisch ermittelten Drehzahl der Verteilerscheibe bzw. der Welle im Antriebsstrang derselben und/oder während des Unterschreitens eines minimalen Signal-/Rauschverhältnisses der sensorisch ermittelten, für den Ist-Massenstrom repräsentativen Regelgröße festgestellt wird, so dass in solchen Betriebsphasen die andernfalls auftretenden, teils erheblichen Fehler vermieden werden. Das Regelgerät kann hierbei entweder derart ausgebildet sein, dass es sowohl in dem bekannten Regelmodus als auch in dem erfindungsgemäße vorgesehenen Steuermodus betrieben werden kann, oder das Regelgerät aktiviert im Falle eines der beiden obigen Betriebszustände ein zusätzlich vorgesehenes Steuergerät und setzt selbst die Regelung des Ist-Massenstromes während dieses Betriebszustände aus. Das erfindungsgemäße Verfahren ist dabei unabhängig von dem jeweiligen Antrieb der Verteilerscheiben des Scheibenstreuers (sei er hydraulisch, elektrisch oder insbesondere auch mechanisch) sowie auch unabhängig von der sensorisch erfassten, für die Ist-Massenstrom repräsentativen Regelgröße anwendbar, welche mit beliebigen, aus dem Stand der Technik bekannten Sensoren erfasst werden können. Letztere können gegebenenfalls zusätzlich auch die Drehzahl der Verteilerscheibe bzw. der Welle des Antriebsstrangs derselben erfassen, oder es können zu diesem Zweck separate Sensoren vorgesehen sein, welche wenigstens einer Welle im Antriebsstrang der Verteilerscheibe zugeordnet sind und sich beispielsweise auch im Bereich des Zapfwelleneingangs befinden können, wie es bei mechanischen Antrieben der Verteilerscheibe bekannt ist. In diesem Zusammenhang sei darauf hingewiesen, dass die "Welle im Antriebsstrang der Verteilerscheibe" im Sinne der Erfindung im Falle eines mechanischen Antriebs der Verteilerscheibe(n) des Scheibenstreuers auch die an den Antriebsstrang angeschlossene Zapfwelle einer Zugmaschine, wie eines Traktors, umfassen kann, wobei die Drehzahl der Zapfwelle auch dann, falls ihr ein Getriebe nachgeordnet ist, bei Kenntnis des Unter-/Übersetzungsverhältnisses dieses Getriebes ohne weiteres in die Drehzahl der Verteilerscheibe(n) umgerechnet werden kann.

Gemäß einer ersten, sehr einfachen und kostengünstigen Ausführungsvariante kann vorgesehen sein, dass wenigstens eine der letzten, für die Öffnungsposition des Dosierorgans repräsentativen Stellgrößen im Regelmodus gespeichert und diese Stellgröße in dem daraufhin folgenden Steuermodus konstant gehalten wird. Folglich wird im Steuermodus die für die Öffnungsposition des Dosierorgans repräsentative Stellgröße, wie beispielsweise die Aktuatorposition eines Dosierschiebers des Dosierorgans, auf einen konstanten Wert gesteuert, welcher vorzugsweise dem letzten oder einem Mittelwert der letzen Werte für diese Stellgröße in dem vorangegangenen Regelmodus entspricht. In diesem Zusammenhang ist es folglich möglich, dass

- die letzte, für die Öffnungsposition des Dosierorgans repräsentative Stellgröße oder
- ein Mittelwert über eine Mehrzahl der letzten, für die Öffnungsposition des Dosierorgans repräsentativen Stellgrößen

im Regelmodus gespeichert und für den Steuermodus verwendet wird. Letztere Ausführungsform verhindert zusätzlich, dass ein zufälliger "Ausreißer" der für die Öffnungsposition des Dosierorgans repräsentativen Stellgröße für den Steuermodus herangezogen wird, indem eine Mehrzahl an aktuellen Werten gemittelt wird und der Mittelwert in den Steuermodus eingeht.

Gemäß einer zweiten, demgegenüber weitergebildeten Ausführungsvariante kann vorgesehen sein, dass die für die Öffnungsposition des Dosierorgans repräsentative Stellgröße im Steuermodus in Abhängigkeit eines für die physikalischen Eigenschaften des jeweiligen Streugutes, insbesondere dessen Fließverhalten, repräsentativen Wertes generiert wird. Der Vorteil dieser zweiten Ausführungsvariante besteht darin, dass sie die physikalischen Eigenschaften des Streugutes berücksichtigt, wie vorzugsweise zumindest dessen Fließ- bzw. Rieselverhalten, was insbesondere durch den sogenannten Fließfaktor beschrieben werden kann (siehe hierzu weiter unten), wobei ein solcher Fließfaktor beispielsweise einer Streutabelle des jeweils verwendeten Streugutes entnommen werden kann.

Eine der Realität besonders nahe kommende und folglich besonders bevorzugte Ausgestaltung kann in diesem Zusammenhang vorsehen, dass wenigstens einer der letzten, für die physikalischen Eigenschaften des Streugutes, insbesondere dessen Fließverhalten, repräsentativen Werte im Regelmodus gespeichert und die für die Öffnungsposition des Dosierorgans repräsentative Stellgröße in dem daraufhin folgenden Steuermodus in Abhängigkeit dieses gespeicherten Wertes generiert wird. Folglich wird nicht nur im Regelmodus, sondern auch während des Steuermodus' dem tatsächlichen (gegenwärtigen) Fließverhalten des Streugutes Rechnung getragen, welches aufgrund äußerer Einwirkungen, wie Feuchtigkeit, Fremdstoffeintrag etc., nicht unerheblichen Schwankungen unterworfen sein kann. Auch in Bezug auf die zweite Ausführungsvariante ist es selbstverständlich möglich, dass

- der letzte, für die physikalischen Eigenschaften des Streugutes, insbesondere dessen Fließverhalten, repräsentative Wert, wie beispielsweise der Fließfaktor bzw. dessen Reziprokwert (siehe hierzu weiter unten), oder
- ein Mittelwert über eine Mehrzahl der letzten, für die physikalischen Eigenschaften des Streugutes, insbesondere dessen Fließverhalten, repräsentativen Werte, wie beispielsweise der Fließfaktoren bzw. deren Reziprokwerte (siehe hierzu weiter unten)

im Regelmodus gespeichert und für den Steuermodus verwendet wird. Letztere Ausführungsform verhindert zusätzlich, dass ein zufälliger "Ausreißer" des für das Fließverhalten des Streugutes repräsentativen Wertes (z.B. aufgrund einer Verunreinigung des Streugutes, wie eines Steins, Feuchtigkeitseinschlusses oder dergleichen) für den Steuermodus herangezogen wird, indem eine Mehrzahl an aktuellen Werten gemittelt wird und der Mittelwert in die Steuermodus eingeht.

Die Berücksichtigung des Fließverhaltens des Streugutes macht es insbesondere auch möglich, dass die für die Öffnungsstellung des Dosierorgans repräsentative Stellgröße ferner in Abhängigkeit des als Führungsgröße dienenden Soll-Massenstromes generiert werden kann, so dass der Soll-Massenstrom, sofern gewünscht, auch während des Steuermodus' geändert werden kann und aufgrund des bekannten Fließverhaltens gleichwohl ein für die Öffnungsstellung des Dosierorgans repräsentativer, sehr realistischer Wert erhalten werden kann. Sofern überdies, wie oben erwähnt, der letzte oder die letzten, für die physikalischen Eigenschaften des Streugutes, insbesondere für dessen Fließ- bzw. Rieselverhalten, repräsentativen Werte im Regelmodus gespeichert wird bzw. werden und eine für die Öffnungsposition des Dosierorgans repräsentative Stellgröße in Abhängigkeit dieses gespeicherten Wertes sowie in Abhängigkeit des als Führungsgröße dienenden Soll-Massenstromes, aber unabhängig von der sensorisch ermittelten, für den Ist-Massenstrom repräsentative Regelgröße generiert wird, lässt sich das Dosierorgan der Verteilerscheibe folglich - unabhängig von dieser Regelgröße - in einer der Realität sehr nahe kommenden Weise steuern. In diesem Zusammenhang sei nochmals erwähnt, dass die sogenannten Fließfaktoren, welche das Fließ- bzw. Rieselverhalten des Streugutes beschreiben, zwar grundsätzlich auch entsprechenden Streutabellen entnommen und - beispielsweise um einen Anfangswert für die Regelung zu erhalten - in das Regelgerät eingegeben werden können (EP 0 674 831 A1), doch können solche Fließfaktoren erheblichen Schwankungen ausgesetzt sein und sich nicht nur von Charge zu Charge derselben Streugutart deutlich unterscheiden, sondern sich mit der Zeit, wie insbesondere im Falle eines Kontaktes mit Feuchtigkeit von üblicherweise hygroskopischem Mineraldünger oder auch Streusalz, merklich verändern. Die Erfindung ermöglicht indes eine Speicherung einen anlässlich der Regelung erhaltenen, d.h. bereits eingeregelten, repräsentativen Wert für das Fließverhalten des Streugutes und "überbrückt" die Steuerphase folglich mit einem aktuell richtigen Wert, welcher die gegenwärtigen physikalischen Streuguteigenschaften genau repräsentiert. Etwaige sprunghafte Änderungen der Stellgröße, wie beispielsweise der Aktuatorposition eines Dosierschiebers des Dosierorgans, und dadurch bedingte sprunghafte Änderungen des Ist-Massenstromes, welche in einer temporären lokalen Über- oder Unterdüngung resultierten, werden daher erfindungsgemäß beim Übergang von dem Regelbetrieb in den Steuerbetrieb zuverlässig vermieden.

In vorteilhafter Ausgestaltung kann dabei vorgesehen sein, dass es sich bei dem für die physikalischen Eigenschaften des Streugutes repräsentativen Wert um den Reziprokwert des Fließfaktors handelt, welcher durch den Quotienten des als Führungsgröße dienenden Soll-Massenstroms durch die für die Öffnungsstellung des Dosierorgans repräsentative Stellgröße, wie beispielsweise der Aktuatorposition eines Dosierschiebers des Dosierorgans, definiert ist. Der Fließfaktor geht folglich vorzugsweise direkt in den Steuermodus ein.

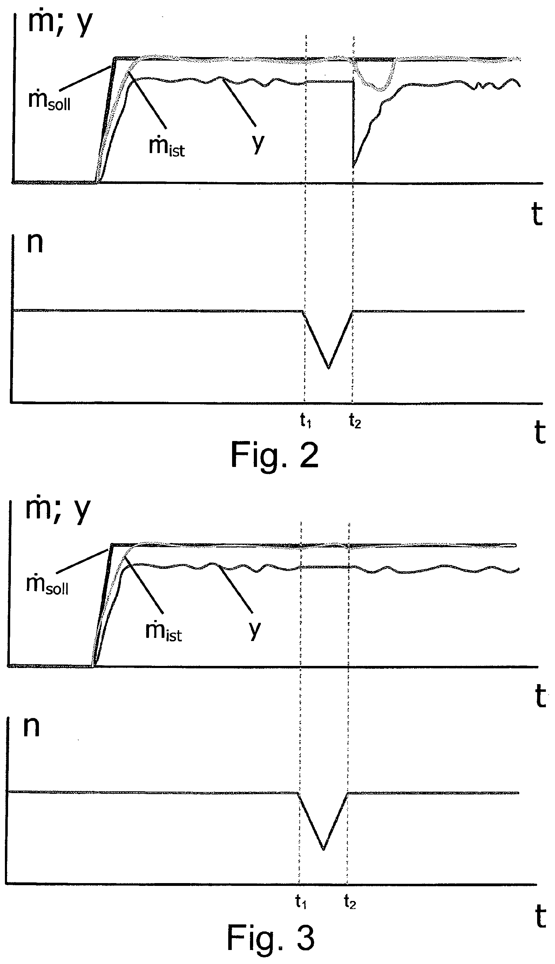

In Fig. 2 ist die erfindungsgemäße Wirkung anhand der Überbrückung einer Drehzahländerung der Verteilerscheibe im Steuermodus gegenüber dem bei konstanter Drehzahl erfolgenden Regelmodus grafisch veranschaulicht. Die in Fig. 2 untere Kurve zeigt in Analogie zu Fig. 1 (siehe oben) den Verlauf der Drehzahl n über die Zeit t während einer Phase der Streuarbeit. Die Drehzahl n ist wiederum weitgehend konstant, fällt jedoch zu einem Zeitpunkt $t_1$ ab, woraufhin sie wieder ansteigt, um zu einem Zeitpunkt $t_2$ wieder den gewünschten, konstanten Wert zu erreichen. Diese Situation entspricht insoweit exakt der in Fig. 1 grafisch wiedergegebenen Situation. Die in Fig. 2 oberen Kurven zeigen wiederum einerseits den Verlauf des Soll-Massenstromes $\dot{m}_{soll}$ als Führungsgröße über die Zeit t, welcher in Analogie zu Fig. 1 etwa konstant und dem Regelgerät in Abhängigkeit der Fahrgeschwindigkeit, der gewünschten Soll-Streumenge pro Fläche und der gewünschten Arbeitsbreite eingegeben worden ist. Andererseits zeigen die in Fig. 2 oberen Kurven - wiederum in Analogie zu Fig. 1 - den Verlauf der Stellgröße y, welche beispielsweise der Stellung des Aktuators eines Dosierschiebers des Dosierorgans entsprechen kann, sowie des Ist-Massenstromes $\dot{m}_{ist}$ als Regelgröße über die Zeit t (graue Kurve).

Wie aus Fig. 2 ersichtlich, setzt zum Zeitpunkt $t_1$, an welchem die Drehzahl absinkt, der Regelmodus aus und beginnt der Steuermodus, wobei insbesondere aufgrund dessen, dass wenigstens einer der letzten, für das aktuelle Fließverhalten des Streugutes repräsentativen Werte des Regelmodus' gespeichert und der Steuermodus diesen repräsentativen Wert verwendet, ein fließender Übergang der Stellgröße y und somit des Ist-Massenstromes $\dot{m}_{ist}$ sichergestellt wird, wobei die Stellgröße y (also beispielsweise die Aktuatorposition des Dosierschiebers des Dosierorgans) und somit der Ist-Massenstrom $\dot{m}_{ist}$ insbesondere etwa konstant gehalten werden kann, so lange sich die Drehzahl n der Verteilerscheibe in einem Maße ändert, dass die Regelung aus den oben erläuterten Gründen zu unrealistischen Ergebnisses führen würde. Unter- oder Überdüngungen während der Zeit $t_1 < t < t_2$, in welcher Änderungen der Drehzahl n der Verteilerscheibe auftreten, werden auf diese Weise zuverlässig vermieden, was freilich in entsprechender Weise dann gilt, sofern die Drehzahl n mehr oder minder sprunghaft ansteigt (nicht gezeigt). Erreicht die Drehzahl n der Verteilerscheibe zum Zeitpunkt $t_2$ wieder einen konstanten Wert bzw. unterschreitet sie einen vorherbestimmten Maximalwert einer gerade noch tolerierbaren Änderung, so wird der Steuermodus wieder deaktiviert und beginnt der Regelmodus von neuem, wobei sich nach einer gewissen Einregelzeit ($t > t_2$) dieselbe (Regel)situation ergibt wie vor der Drehzahländerung ($t < t_1$).

Die Erfindung macht es ferner möglich, dass die Steuerung des Dosierorgans im Steuermodus unabhängig von der sensorisch ermittelten Drehzahl der Verteilerscheibe oder der Welle im Antriebsstrang derselben erfolgt. Dem Steuermodus kann folglich auch dann, wenn er sowohl den - gegebenenfalls veränderbaren - Soll-Massenstrom an Streugut als auch den (vorab eingegebenen oder insbesondere aus dem vorangegangenen Regelmodus übernommenen) Fließfaktor des Streugutes berücksichtigt, ein sehr einfacher Algorithmus zugrunde liegen, welcher neben dem Soll-Massenstrom als Führungsgröße lediglich den insbesondere aus dem Regelmodus übernommenen, aktuellen Wert, welcher die physikalischen (Fließ)eigenschaften des Streugutes repräsentiert, benötigt. Gleichwohl muss die Drehzahl der Verteilerscheibe bzw. der Welle im Antriebsstrang derselben freilich fortwährend und/oder in periodischen Zeitabständen sensorisch erfasst werden bzw. muss das Signal-/Rauschverhältnis der sensorisch erfassten, für den Ist-Massenstrom repräsentative Regelgröße fortwährend und/oder in periodischen Zeitabständen überwacht werden, um das Ende des Steuermodus' zu ermitteln und den Regelmodus wieder einzuleiten zu können.

Gemäß einer vorteilhaften Ausgestaltung kann ferner vorgesehen sein, dass die Steuerung des Dosierorgans im Steuermodus in Abhängigkeit des Reziprokwertes wenigstens eines der letzten Fließfaktoren im Regelmodus multipliziert mit dem als Führungsgröße dienenden Soll-Massenstrom ($\dot{m}_{soll}$) erfolgt.

Nachfolgend ist exemplarisch eine Steuergleichung in Abhängigkeit der Zeit t dargestellt, wie sie dem Steuermodus (ab dem Zeitpunkt $t_1$ bis zum Zeitpunkt $t_2$ gemäß Fig. 2) zugrunde liegen kann:

$$y_S(t) = \frac{y_R(t_1 - 1)}{w(t_1 - 1)} * w(t)$$

Dabei bedeuten:

$y_s(t)$: Stellgröße während des Steuermodus', wie z.B. die Aktuatorposition eines Dosierschiebers des Dosierorgans, in Abhängigkeit der Zeit t;

$y_R(t1 - 1)$: letzte Stellgröße (z.B. Aktuatorposition des Dosierschiebers) des Regelmodus zu dem Zeitpunkt unmittelbar vor $t_1$ (siehe Fig. 2), also unmittelbar vor dem Umschalten in den Steuermodus;

$w(t_1-1)$: letzte Führungsgröße (Soll-Massenstrom $\dot{m}_{soll}$) des Regelmodus zu dem Zeitpunkt unmittelbar vor $t_1$ (siehe Fig. 2), also unmittelbar vor dem Umschalten in den Steuermodus; und

$w(t)$: Führungsgröße (Soll-Massenstrom $\dot{m}_{soll}$) in Abhängigkeit der Zeit t, wie er dem Regelgerät zuvor eingegeben worden ist.

Der Term

$$\frac{y_R(t_1 - 1)}{w(t_1 - 1)}$$

entspricht folglich dem Reziprokwert des Fließfaktors des Streugutes, welcher durch den Quotienten des als Führungsgröße w dienenden Soll-Massenstromes $\dot{m}_{soll}$ durch die für die Öffnungsstellung des Dosierorgans repräsentative Stellgröße y definiert ist, zu dem Zeitpunkt unmittelbar vor $t_1$ (siehe Fig. 2), also am Ende des Regelmodus' unmittelbar vor dem Umschalten in den Steuermodus. Wie oben erwähnt, kann anstelle des letzten Wertes zum Zeitpunkt $(t_1 - 1)$ auch der Mittelwert über eine Mehrzahl an letzten Werten des Regelmodus' berücksichtigt werden.
Was den Regelmodus betrifft, so kann gemäß einem Ausführungsbeispiel vorgesehen sein, dass die Regelung des Ist-Massenstromes im Regelmodus anhand einer Mehrzahl an in dem Regelgerät oder einem diesem zugeordneten Speicher abgespeicherten Kennlinien erfolgt, welche die Abhängigkeit des Ist-Massenstromes von der jeweiligen sensorisch ermittelten, für den Ist-Massenstrom repräsentativen Regelgröße aus der Gruppe

- Drehmoment wenigstens einer Welle in einem Antriebsstrang der Verteilerscheibe;
- Torsion wenigstens einer Welle in einem Antriebsstrang der Verteilerscheibe;
- Druckdifferenz eines zum Antrieb der Verteilerscheibe dienenden Hydromotors; und
- Stromaufnahme eines zum Antrieb der Verteilerscheibe dienenden Elektromotors

für verschiedene Drehzahlen oder Drehzahlbereiche der Verteilerscheibe oder der Welle im Antriebsstrang derselben beschreiben. Jede in dem Regelgerät hinterlegte Kennlinie, welche - wie eingangs erwähnt - z.B. nach Art einer Geradengleichung aufgebaut sein kann, aber auch eine beliebige andere funktionale Abhängigkeit des Ist-Massenstromes von der sensorisch ermittelten Regelgröße, z.B. in Form einer Kurve, beschreiben kann, bezieht sich folglich auf eine bestimmte Drehzahl, so dass in dem Regelgerät eine Kennlinienschar hinterlegt ist, wobei der aktuellen Drehzahl der Verteilerscheibe oder der Welle im Antriebsstrang derselben jeweils die zugehörige Kennlinie zugeordnet wird.
Gemäß einem alternativen Ausführungsbeispiel kann vorgesehen sein, dass die Regelung des Ist-Massenstromes im Regelmodus anhand wenigstens einer mathematischen Funktion erfolgt, welche die Abhängigkeit des Ist-Massenstromes sowohl von der jeweiligen sensorisch ermittelten, für den Ist-Massenstrom repräsentativen Regelgröße aus der Gruppe

- Drehmoment wenigstens einer Welle in einem Antriebsstrang der Verteilerscheibe;
- Torsion wenigstens einer Welle in einem Antriebsstrang der Verteilerscheibe;
- Druckdifferenz eines zum Antrieb der Verteilerscheibe dienenden Hydromotors; und
- Stromaufnahme eines zum Antrieb der Verteilerscheibe dienenden Elektromotors

als auch von der Drehzahl der Verteilerscheibe oder der Welle im Antriebsstrang derselben beschreibt. In diesem Fall geht die Drehzahl folglich in die die Kennlinie oder

- kurve bildende mathematische Funktion ein und ist letztere universell für eine Mehrzahl an Drehzahlen der Verteilerscheibe bzw. der Welle in deren Antriebsstrang anwendbar.

Darüber hinaus ist es selbstverständlich denkbar, anstelle von Kennlinien bzw. -kurven ein Kennfeld zu verwenden, wie es eingangs erwähnt und als solches aus dem dort zitierten dem Stand der Technik bekannt ist.

In weiterhin vorteilhafter Ausgestaltung kann im Übrigen ferner vorgesehen sein, dass die für den Ist-Massenstrom repräsentative Regelgröße aus der Gruppe

- Drehmoment wenigstens einer Welle in einem Antriebsstrang der Verteilerscheibe; und
- Torsion wenigstens einer Welle in einem Antriebsstrang der Verteilerscheibe

gewählt wird, so dass das erfindungsgemäße Verfahren für sämtliche gattungsgemäßen Scheibenstreuer unabhängig von deren Antrieb der Verteilerscheiben - sei er mechanisch, hydraulisch oder elektrisch - anwendbar ist. In diesem Zusammenhang hat es sich überdies als vorteilhaft erwiesen, wenn das Drehmoment und/oder die Torsion der Welle in dem Antriebsstrang der Verteilerscheibe berührungsfrei, insbesondere mittels eines Magnetostriktionssensors, ermittelt wird. Beispielhaft seien in diesem Zusammenhang Fluxgate-Magnetometer erwähnt, wie sie in der eingangs erwähnten, zum Prioritätsdatum der vorliegenden Patentanmeldung noch nicht veröffentlichten DE 10 2012 002 585 A1 beschrieben sind, wobei der Offenbarungsgehalt der DE 10 2012 002 585 A1 hiermit explizit zum Gegenstand der vorliegenden Anmeldung gemacht wird.

Darüber hinaus kann es zweckmäßig sein, dass die für den Ist-Massenstrom repräsentative Regelgröße einerseits, insbesondere in periodischen Zeitabständen, im Leerlauf bei geschlossenem Dosierorgan und folglich unbelasteter Verteilerscheibe, andererseits bei Belastung der Verteilerscheibe mit dem Ist-Massenstrom sensorisch ermittelt wird, wobei der im Leerlauf ermittelte Wert von dem unter Last ermittelten Gesamtwert subtrahiert wird, um den nur durch den Ist-Massenstrom des Streugutes bewirkten Differenzwert zu ermitteln, wobei dem Regelgerät dieser Differenzwert als die wenigstens eine sensorisch ermittelte, für den Ist-Massenstrom repräsentative Regelgröße aus der Gruppe

- Drehmoment wenigstens einer Welle in einem Antriebsstrang der Verteilerscheibe;
- Torsion wenigstens einer Welle in einem Antriebsstrang der Verteilerscheibe;
- Druckdifferenz eines zum Antrieb der Verteilerscheibe dienenden Hydromotors; und
- Stromaufnahme eines zum Antrieb der Verteilerscheibe dienenden Elektromotors

eingegeben wird. Sofern es sich bei dem Scheibenstreuer um eine landwirtschaftliche Verteilmaschine handelt, können die Leerlaufmessungen der Regelgröße insbesondere während der Fahrt durch das Vorgewende erfolgen, während das bzw. die Dosierorgan(e) ohnehin geschlossen werden müssen und folglich kein Streugut auf die Verteilerscheibe(n) auftrifft.

Wie bereits angedeutet, ist es selbstverständlich zweckmäßig, wenn das Regelgerät

- wieder in den Regelmodus versetzt wird oder
- den Steuermodus des Steuergerätes deaktiviert, sobald
- der, insbesondere vorherbestimmbare, Maximalwert von Änderungen der sensorisch ermittelten Drehzahl der Verteilerscheibe oder der Welle im Antriebsstrang derselben wieder erreicht oder unterschritten wird und/oder
- das, insbesondere vorherbestimmbaren, minimalen Signal-/ Rauschverhältnis der sensorisch ermittelten, für den Ist-Massenstrom an Streugut repräsentativen Regelgröße wieder erreicht oder überschritten wird.

Dies entspricht der beispielhaften Situation nach dem Zeitpunkt $t_2$ gemäß Fig. 1, in welcher die Drehzahl n der Verteilerscheibe (gerade) wieder konstant ist und die Phase des Steuermodus ($t_1 < t < t_2$) beendet worden ist, um eine neuerliche Phase des Regelmodus' einzuleiten ($t > t_2$). Der Steuermodus dient folglich lediglich zur Überbrückung von Betriebsphasen, in welchen der Regelmodus aufgrund Veränderungen der Drehzahl der Verteilerscheibe bzw. der Welle in deren Antriebsstrang und/oder aufgrund eines so geringen, sensorisch erfassten Ist-Massenstromes, dass sich das Signal im Grundrauschen befindet, zu realitätsfernen Massenströmen an Streugut führen würde, wobei andernfalls der Regelmodus das Mittel der Wahl darstellt.

In diesem Zusammenhang kann gemäß einer besonders vorteilhaften Weiterbildung des erfindungsgemäßen Verfahrens vorgesehen sein, dass

- nach Zurückversetzen des Regelgerätes in den Regelmodus oder
- nach Deaktivieren des Steuergerätes

zumindest bei der ersten Ermittlung der für die Öffnungsstellung des Dosierorgans repräsentative Stellgröße im Regelmodus ein integrativer Anteil der Regelung, welcher die Abweichung des Ist-Massenstromes an Streugut von dem Soll-Massenstrom an Streugut über die Zeit integriert, auf null gesetzt wird.

Des Weiteren kann gemäß einer solchen besonders vorteilhaften Weiterbildung des erfindungsgemäßen Verfahrens alternativ oder vorzugsweise kumulativ vorgesehen sein, dass wenigstens eine der letzten, für die Öffnungsstellung des Dosierorgans repräsentativen Stellgrößen im Steuermodus gespeichert wird und diese gespeicherte Stellgröße

- nach Zurückversetzen des Regelgerätes in den Regelmodus oder
- nach Deaktivieren des Steuergerätes

bei der Ermittlung des für die Öffnungsstellung des Dosierorgans repräsentativen Stellgröße im Regelmodus der Regelung als, insbesondere summarischer, Anteil hinzugefügt wird. Ähnlich wie in Bezug auf den Steuermodus (siehe oben) kann es auch hier von Vorteil sein, wenn die letzte Stellgröße im Steuermodus oder ein Mittelwert über eine Mehrzahl an letzten Stellgrößen im Steuermodus gespeichert und für den Regelmodus verwendet wird. Sofern im Steuermodus eine konstante Stellgröße generiert wird, welche beispielsweise von einem konstanten Soll-Massenstrom und einem konstanten Fließfaktor des Streugutes während der Steuerphase ausgeht, kann freilich auch eine beliebige Stellgröße des Steuermodus' gespeichert und für den daraufhin einsetzenden Regelmodus berücksichtigt werden.

Die genannten Maßnahmen machen es insbesondere möglich, der Einregelphase zu Beginn des Regelmodus', also nach Beendigung eines temporären Steuermodus', einen aus dem Steuermodus übernommenen, repräsentativen Startwert zuzuordnen, so dass anfängliche Ausschläge während der Einregelphase vermieden und auch zu Beginn des Regelmodus' sowohl eine zu geringe als auch eine übermäßige Ausbringung an Streugut verhindert werden kann.

In jedem Fall kann es von Vorteil sein, wenn im Regelmodus von dem der Regelung hinzugefügten summarischen Anteil der für die Öffnungsstellung des Dosierorgans repräsentativen, gespeicherten Stellgröße aus dem Steuermodus ein für die Abweichung des Ist-Massenstromes an Streugut von dem Soll-Massenstrom an Streugut zum Zeitpunkt während oder unmittelbar

- nach Zurückversetzen des Regelgerätes in den Regelmodus oder
- nach Deaktivieren des Steuergerätes

repräsentativer Wert subtrahiert wird. Letzterer kann insbesondere von der Regelabweichung, also von der Differenz des Ist-Massenstromes von dem Soll-Massenstrom zum Zeitpunkt während oder unmittelbar nach Beginn des Regelmodus' abhängig sein, so dass sich der summarische Anteil und der hiervon zu subtrahierende Wert mit zunehmender Fortdauer des Regelmodus', d.h. wenn der Ist-Massenstrom dem Soll-Massenstrom sehr nahe kommt, im Wesentlichen aufheben.

Nachfolgend ist ein Ausführungsbeispiel eines solchen summarischen Anteils der Regelung einschließlich eines hiervon zu subtrahierenden Wertes exemplarisch wiedergegeben:

$$y_{Radaptiv} = y_S(t_2) - K_P * x_d(t_2) - K_D * \dot{x}_d(t_2)$$

Dabei bedeuten:

$y_{Radaptiv}$: einen Gesamtterm eines Anteils der Stellgröße y, wie z.B. der Aktuatorposition eines Dosierschiebers des Dosierorgans, eines Regelalgorithmus' (Index "R"; siehe hierzu weiter unten);

$y_2(t_2)$: einen summarischen Anteil des Gesamtterms $y_{Radaptiv}$ für die Stellgröße y, welcher die letzte, für die Öffnungsstellung des Dosierorgans (wie z.B. der Aktuatorposition dessen Dosierschiebers) repräsentative Stellgröße y im vorangehenden Steuermodus (Index "S") zum Zeitpunkt $t_2$, also unmittelbar vor dem Umschalten in den Regelmodus, beschreibt (siehe Fig. 3 in Verbindung mit den Erläuterungen weiter unten) und gespeichert wird. $y_2(t_2)$ entspricht folglich der letzten Stellgröße im Steuermodus;

$K_P * x_d(t_2)$: einen ersten, von dem summmarischen Anteil $y_2(t_2)$ zu subtrahierenden Wert, welcher für die Regelabweichung $x_d$ (d.h. für die Abweichung des Ist-Massenstromes $\dot{m}_{ist}$ von dem Soll-Massenstrom $\dot{m}_{soll}$) zum

Zeitpunkt $t_2$, also unmittelbar vor dem Umschalten in den Regelmodus (siehe Fig. 3 in Verbindung mit den Erläuterungen weiter unten) repräsentativ ist, wobei $K_p$ eine erste Konstante ist; und

$K_D * x_d(t_2)$:    einen zweiten, von dem summmarischen Anteil $y_2(t_2)$ zu subtrahierenden Wert, welcher für die erste Ableitung der Regelabweichung $x_d$ (d.h. für die Abweichung des Ist-Massenstromes $\dot{m}_{ist}$ von dem Soll-Massenstrom $\dot{m}_{soll}$) zum Zeitpunkt $t_2$, also unmittelbar vor dem Umschalten in den Regelmodus (siehe Fig. 3 in Verbindung mit den Erläuterungen weiter unten) repräsentativ ist, wobei $K_D$ eine zweite Konstante ist.

Ein (gesamter) Regelalgorithmus für die Stellgröße $y_R(t)$, wie beispielsweise der Aktuatorposition eines Dosierschiebers des Dosierorgans, während des Regelmodus' in Abhängigkeit der Zeit t kann hier beispielsweise wie folgt lauten:

$$y_R(t) = K_P * x_d(t) + K_D * \dot{x}_d(t) + K_I * \int x_d * dt + y_{Radaptiv}$$

Dabei bedeuten:

$K_P; K_D; K_I$ :    Konstanten;

$x_d(t)$:    Regelabweichung, d.h. die Abweichung des Ist-Massenstromes $\dot{m}_{ist}$ von dem Soll-Massenstrom $\dot{m}_{soll}$ in Abhängigkeit der Zeit t;

$\dot{x}_d(t)$:    erste Ableitung der Regelabweichung, d.h. der Abweichung des Ist-Massenstromes $\dot{m}_{ist}$ von dem Soll-Massenstrom $\dot{m}_{soll}$ über die Zeit t;

$\int x_d * dt$:    integrativer Anteil des Regelalgorithmus', welcher das Integral der Regelabweichung, d.h. der Abweichung des Ist-Massenstromes $\dot{m}_{ist}$ von dem Soll-Massenstrom $\dot{m}_{soll}$, nach der Zeit t beschreibt; und

$y_{Radaptiv}$:    Gesamtterm eines Anteils der Stellgröße y, wie beispielsweise der Aktuatorposition eines Dosierschiebers des Dosierorgans, des Regelalgorithmus', welche die letzte Stellgröße y des vorangegangenen Steuermodus' berücksichtigt (siehe oben).

In Fig. 3 ist die Wirkung der erfindungsgemäßen Initialisierung des Regelmodus' nach vorangegangenem Regelmodus, also nach der Überbrückung einer Drehzahländerung der Verteilerscheibe im Steuermodus, grafisch veranschaulicht. Die in Fig. 2 untere Kurve zeigt in Analogie zu Fig. 1 und 2 (siehe oben) den Verlauf der Drehzahl n über die Zeit t während einer Phase der Streuarbeit. Die Drehzahl n ist wiederum weitgehend konstant, fällt jedoch zu einem Zeitpunkt $t_1$ ab, woraufhin sie wieder ansteigt, um zu einem Zeitpunkt $t_2$ wieder den gewünschten, konstanten Wert zu erreichen. Diese Situation entspricht insoweit exakt der in Fig. 1 und 2 grafisch wiedergegebenen Situation. Die in Fig. 3 oberen Kurven zeigen wiederum einerseits den Verlauf des Soll-Massenstromes $\dot{m}_{soll}$ als Führungsgröße über die Zeit t, welcher in Analogie zu Fig. 1 und 2 etwa konstant und dem Regelgerät in Abhängigkeit der Fahrgeschwindigkeit, der gewünschten Soll-Streumenge pro Fläche und der gewünschten Arbeitsbreite eingegeben worden ist. Andererseits zeigen die in Fig. 3 oberen Kurven - wiederum in Analogie zu Fig. 1 und 2 - den Verlauf der Stellgröße y, welche beispielsweise der Stellung des Aktuators eines Dosierschiebers des Dosierorgans entsprechen kann, sowie des Ist-Massenstromes $\dot{m}_{ist}$ als Regelgröße über die Zeit t (graue Kurve).

Wie aus Fig. 3 ersichtlich, entspricht der erfindungsgemäße Steuerbetrieb während der Drehzahländerung der Verteilerscheibe ($t_1 < t < t_2$) dem gemäß Fig. 2. Indes macht der in Fig. 3 veranschaulichte Regelalgorithmus, wie er während der Regelmodi in Phasen konstanter Drehzahl Anwendung findet, von der oben beschriebenen Regelgleichung Gebrauch, wobei der integrative Anteil $\int x_d * dt$ dieser Regelgleichung bei der ersten Ermittlung der für die Öffnungsstellung des Dosierorgans repräsentativen Stellgröße $y_R$, wie beispielsweise der Aktuatorposition eines Dosierschiebers des Dosierorgans, im Regelmodus ($t > t_2$) auf null gesetzt wird. Auf diese Weise erhält der Term $y_{Radaptiv}$, welcher einerseits die letzte Stellgröße $y_s$ des vorangegangenen Steuermodus', andererseits die letzte Regelabweichung $x_d$ (Abweichung des Ist-Massenstromes $\dot{m}_{ist}$ von dem Soll-Massenstrom $\dot{m}_{ist}$) berücksichtigt, ein erhöhtes Gewicht, während dieser Term $y_{Radaptiv}$ andererseits mit fortschreitender Dauer des Regelbetriebs (die Regelabweichung $x_d$ wird geringer) an Gewicht verliert, während der integrative Anteil $\int x_d * dt$ zuverlässige Werte liefert.

Wie der Fig. 3 zu entnehmen ist, lassen sich auf diese Weise nicht nur Unter- oder Überdüngungen während des Auftretens von Drehzahländerungen der Verteilerscheibe, d.h. während des Zeitraumes $t_1 < t < t_2$, zuverlässig

vermeiden, was durch die erfindungsgemäße Umschaltung des Regelmodus' in den Steuermodus erreicht wird, sondern werden insbesondere auch - wenn auch demgegenüber geringere, aber gleichwohl aus Pflanzenschutz-, Umwelt- sowie auch aus wirtschaftlichen Gründen zu vermeidende - Unter- oder Überdüngungen (in Fig. 3 Unterdüngungen) aufgrund einer Initialisierung des Regelmodus nach dem Steuermodus zuverlässig vermieden, indem der Regelalgorithmus die aus dem letzten Steuermodus resultierende Stellgröße $y_R$ berücksichtigt und - beispielsweise in einer anhand der obigen Regelgleichung exemplarisch beschriebenen Weise - zu Beginn des Regelmodus in einem hohen Maße gewichtet wird, während sie sich mit fortschreitender Regeldauer, z.B. bis etwa 0, an Gewichtung verliert, da sie von dem integrativen Anteil $\int x_d*dt$ (siehe oben) der Stellgröße $y_R$ zunehmend kompensiert wird.

Entsprechendes gilt selbstverständlich für den nicht grafisch wiedergegebenen Fall, bei dem die Drehzahl der Verteilerscheibe bzw. der Welle in deren Antriebsstrang zwar konstant geblieben sein mag, aber ein Signal-/Rauschverhältnis der sensorisch ermittelten, für dem Ist-Massenstrom repräsentativen Regelgröße temporär unterschritten worden ist, was zu einer Umschaltung des Regelmodus' in den Steuermodus geführt hat, woraufhin der Regelmodus in derselben Weise und unter Heranziehung desselben Regelalgorithmus' initiiert werden kann.

In jedem Fall kann es von Vorteil sein, wenn zumindest im Regelmodus mit jedem Rechenzyklus (welcher gegebenenfalls eine Änderung der Regelabweichung aufgrund eines sensorisch erfassten Ist-Massenstromes, welcher gegenüber dem vorigen Rechenzyklus' mehr oder weniger von dem Soll-Massenstrom abweicht, zu Tage bringen kann) eine aktualisierte, für die Öffnungsstellung des Dosierorgans repräsentativen Stellgröße erzeugt wird. Die Rechenzyklen können dabei vorzugsweise in sehr kleinen Zeitabständen von beispielsweise etwa 10 ms erfolgen, um für eine Regelung des Massenstromes an Streugut praktisch in Echtzeit zu sorgen.

In Weiterbildung kann vorgesehen sein, dass der aktuelle Betriebszustand (Regel- oder Steuermodus) auf einer Anzeigeeinrichtung angezeigt wird, so dass der Bediener eine Rückmeldung über die jeweiligen Betriebsmodi erhält und gegebenenfalls regulierend eingreifen kann, sofern die Steuermodi, welche freilich immer nur eine Annährung an den tatsächlichen Ist-Zustand beschreiben können, überhand nehmen. Besonders vorteilhaft kann dies insbesondere im Falle eines mechanischen Antriebs des Scheibenstreuers sein, bei welchem der Antriebsstrang dessen Verteilerscheibe(n) direkt an eine Zapfwelle einer von dem Bediener gesteuerten Zugmaschine, wie eines Traktors, angeschlossen ist, so dass es dem Bediener möglich ist, etwaige Fahrmanöver, die zu einer übermäßigen Veränderung der Drehzahl und somit zu einer Überleitung in den Steuermodus führen, zu vermeiden und somit für einen Streubetrieb vornehmlich im Regelmodus zu sorgen. Zu demselben Zweck kann es gleichfalls von Vorteil sein, wenn die Dauer der Betriebszustände im Regel- und im Steuermodus ermittelt und auf einer Anzeigeeinrichtung angezeigt werden.

Wie bereits erwähnt, bietet sich die Erfindung insbesondere auch für solche Scheibenstreuer an, welche mehrere, insbesondere zwei, Verteilerscheiben aufweisen, wobei insbesondere jeder Verteilerscheibe je ein mittels des rechnergestützten Regelgerätes regelbares Dosierorgan zugeordnet sein kann, um die den Verteilerscheiben zugeordneten Dosierorgane unabhängig voneinander gemäß den jeweiligen Erfordernissen, die auf beiden Seiten unterschiedlich sein können (z.B. dann, wenn unterschiedliche Soll-Massenströme an Streugut beim Bestreuen des am Feldrand gelegenen Vorgewendes, bei der Hangfahrt oder dergleichen erwünscht sind), zu regeln bzw. zu steuern.

**Patentansprüche**

1. Verfahren zur Regelung des Ist-Massenstromes ($\dot{m}_{ist}$) an Streugut wenigstens eines regelbaren Dosierorgans eines Scheibenstreuers mit wenigstens einer, dem Dosierorgan zugeordneten Verteilerscheibe, wobei ein Soll-Massenstrom ($\dot{m}_{soll}$) an Streugut in Abhängigkeit wenigstens eines Parameters aus der Gruppe

    - aktuelle Fahrgeschwindigkeit des Scheibenstreuers;
    - Soll-Streumenge pro Fläche; und
    - Arbeitsbreite

ermittelt und dieser Soll-Massenstrom ($\dot{m}_{soll}$) einem rechnergestützten Regelgerät als Führungsgröße eingegeben wird, wobei dem Regelgerät ferner einerseits wenigstens eine sensorisch ermittelte, für den Ist-Massenstrom ($\dot{m}_{ist}$) repräsentative Regelgröße aus der Gruppe

    - Drehmoment wenigstens einer Welle in einem Antriebsstrang der Verteilerscheibe;
    - Torsion wenigstens einer Welle in einem Antriebsstrang der Verteilerscheibe;
    - Druckdifferenz eines zum Antrieb der Verteilerscheibe dienenden Hydromotors; und
    - Stromaufnahme eines zum Antrieb der Verteilerscheibe dienenden Elektromotors

und andererseits die sensorisch ermittelte Ist-Drehzahl der Verteilerscheibe oder wenigstens einer Welle im Antriebsstrang derselben eingegeben wird, woraufhin in einem Regelmodus des Regelgerätes die Abweichung des

Ist-Massenstromes ($\dot{m}_{ist}$) an Streugut von dem Soll-Massenstrom an Streugut ($\dot{m}_{soll}$) ermittelt und in Abhängigkeit der Ist-Drehzahl ($\dot{m}_{ist}$) der Verteilerscheibe oder der Welle im Antriebsstrang derselben eine für die Öffnungsstellung des Dosierorgans repräsentative Stellgröße generiert wird, um das Dosierorgan auf den Soll-Massenstrom ($\dot{m}_{soll}$) nachzuregeln, **dadurch gekennzeichnet, dass**

- während des Überschreitens eines, insbesondere vorherbestimmbaren, Maximalwertes von Änderungen der sensorisch ermittelten Drehzahl der Verteilerscheibe oder der Welle im Antriebsstrang derselben und/oder
- während des Unterschreitens eines, insbesondere vorherbestimmbaren, minimalen Signal-/Rauschverhältnisses der sensorisch ermittelten, für den Ist-Massenstrom ($\dot{m}_{ist}$) repräsentativen Regelgröße
das Regelgerät
- in einen Steuermodus versetzt wird oder
- einen Steuermodus eines Steuergerätes aktiviert, wobei im Steuermodus eine für die Öffnungsposition des Dosierorgans repräsentative Stellgröße unabhängig von der sensorisch ermittelten, für den Ist-Massenstrom ($\dot{m}_{ist}$) repräsentative Regelgröße generiert wird, um das Dosierorgan der Verteilerscheibe unabhängig von dieser Regelgröße zu steuern.

2. Verfahren nach Anspruch 1, **dadurch gekennzeichnet, dass** wenigstens eine der letzten, für die Öffnungsposition des Dosierorgans repräsentativen Stellgrößen im Regelmodus gespeichert und diese Stellgröße in dem daraufhin folgenden Steuermodus konstant gehalten wird, wobei insbesondere

- die letzte, für die Öffnungsposition des Dosierorgans repräsentative Stellgröße oder
- ein Mittelwert über eine Mehrzahl der letzten, für die Öffnungsposition des Dosierorgans repräsentativen Stellgrößen

im Regelmodus gespeichert und für den Steuermodus verwendet wird.

3. Verfahren nach Anspruch 1, **dadurch gekennzeichnet, dass** die für die Öffnungsposition des Dosierorgans repräsentative Stellgröße im Steuermodus in Abhängigkeit eines für die physikalischen Eigenschaften des jeweiligen Streugutes, insbesondere dessen Fließverhalten, repräsentativen Wertes generiert wird.

4. Verfahren nach Anspruch 3, **dadurch gekennzeichnet, dass** wenigstens einer der letzten, für die physikalischen Eigenschaften des Streugutes repräsentativen Werte im Regelmodus gespeichert und die für die Öffnungsposition des Dosierorgans repräsentative Stellgröße in dem daraufhin folgenden Steuermodus in Abhängigkeit dieses gespeicherten Wertes generiert wird, wobei insbesondere

- der letzte, für die physikalischen Eigenschaften des Streugutes repräsentative Wert oder
- ein Mittelwert über eine Mehrzahl der letzten, für die physikalischen Eigenschaften des Streugutes repräsentativen Werte

im Regelmodus gespeichert und für den Steuermodus verwendet wird.

5. Verfahren nach Anspruch 3 oder 4, **dadurch gekennzeichnet, dass** die für die Öffnungsstellung des Dosierorgans repräsentative Stellgröße ferner in Abhängigkeit des als Führungsgröße dienenden Soll-Massenstromes ($\dot{m}_{soll}$) generiert wird, wobei es sich bei dem für die physikalischen Eigenschaften des Streugutes repräsentativen Wert insbesondere um den Reziprokwert des Fließfaktors handelt, welcher durch den Quotienten des als Führungsgröße dienenden Soll-Massenstroms ($\dot{m}_{soll}$) durch die für die Öffnungsstellung des Dosierorgans repräsentative Stellgröße definiert ist.

6. Verfahren nach einem der Ansprüche 1 bis 5, **dadurch gekennzeichnet, dass** die Steuerung des Dosierorgans im Steuermodus unabhängig von der sensorisch ermittelten Drehzahl der Verteilerscheibe oder der Welle im Antriebsstrang derselben erfolgt.

7. Verfahren nach einem der Ansprüche 3 bis 6, **dadurch gekennzeichnet, dass** die Steuerung des Dosierorgans im Steuermodus in Abhängigkeit des Reziprokwertes wenigstens eines der letzten Fließfaktoren im Regelmodus multipliziert mit dem als Führungsgröße dienenden Soll-Massenstrom ($\dot{m}_{soll}$) erfolgt.

8. Verfahren nach einem der Ansprüche 1 bis 7, **dadurch gekennzeichnet, dass** die Regelung des Ist-Massenstromes

($\dot{m}_{ist}$) im Regelmodus

(a) anhand einer Mehrzahl an in dem Regelgerät oder einem diesem zugeordneten Speicher abgespeicherten Kennlinien erfolgt, welche die Abhängigkeit des Ist-Massenstromes ($\dot{m}_{ist}$) von der jeweiligen sensorisch ermittelten, für den Ist-Massenstrom ($\dot{m}_{ist}$) repräsentativen Regelgröße aus der Gruppe

- Drehmoment wenigstens einer Welle in einem Antriebsstrang der Verteilerscheibe;
- Torsion wenigstens einer Welle in einem Antriebsstrang der Verteilerscheibe;
- Druckdifferenz eines zum Antrieb der Verteilerscheibe dienenden Hydromotors; und
- Stromaufnahme eines zum Antrieb der Verteilerscheibe dienenden Elektromotors

für verschiedene Drehzahlen oder Drehzahlbereiche der Verteilerscheibe oder der Welle im Antriebsstrang derselben beschreiben; oder

(b) anhand wenigstens einer mathematischen Funktion erfolgt, welche die Abhängigkeit des Ist-Massenstromes ($\dot{m}_{ist}$) sowohl von der jeweiligen sensorisch ermittelten, für den Ist-Massenstrom ($\dot{m}_{ist}$) repräsentativen Regelgröße aus der Gruppe

- Drehmoment wenigstens einer Welle in einem Antriebsstrang der Verteilerscheibe;
- Torsion wenigstens einer Welle in einem Antriebsstrang der Verteilerscheibe;
- Druckdifferenz eines zum Antrieb der Verteilerscheibe dienenden Hydromotors; und
- Stromaufnahme eines zum Antrieb der Verteilerscheibe dienenden Elektromotors

als auch von der Drehzahl der Verteilerscheibe oder der Welle im Antriebsstrang derselben beschreibt.

9. Verfahren nach einem der Ansprüche 1 bis 8, **dadurch gekennzeichnet, dass** die für den Ist-Massenstrom ($\dot{m}_{ist}$) repräsentative Regelgröße einerseits, insbesondere in periodischen Zeitabständen, im Leerlauf bei geschlossenem Dosierorgan und folglich unbelasteter Verteilerscheibe, andererseits bei Belastung der Verteilerscheibe mit dem Ist-Massenstrom ($\dot{m}_{ist}$) sensorisch ermittelt wird, wobei der im Leerlauf ermittelte Wert von dem unter Last ermittelten Gesamtwert subtrahiert wird, um den nur durch den Ist-Massenstrom ($\dot{m}_{ist}$) des Streugutes bewirkten Differenzwert zu ermitteln, wobei dem Regelgerät dieser Differenzwert als die wenigstens eine sensorisch ermittelte, für den Ist-Massenstrom ($\dot{m}_{ist}$) repräsentative Regelgröße aus der Gruppe

- Drehmoment wenigstens einer Welle in einem Antriebsstrang der Verteilerscheibe;
- Torsion wenigstens einer Welle in einem Antriebsstrang der Verteilerscheibe;
- Druckdifferenz eines zum Antrieb der Verteilerscheibe dienenden Hydromotors; und
- Stromaufnahme eines zum Antrieb der Verteilerscheibe dienenden Elektromotors

eingegeben wird.

10. Verfahren nach einem der Ansprüche 1 bis 9, **dadurch gekennzeichnet, dass** das Regelgerät

- wieder in den Regelmodus versetzt wird oder
- den Steuermodus des Steuergerätes deaktiviert, sobald
- der, insbesondere vorherbestimmbare, Maximalwert von Änderungen der sensorisch ermittelten Drehzahl der Verteilerscheibe oder der Welle im Antriebsstrang derselben wieder erreicht oder unterschritten wird und/oder
- das, insbesondere vorherbestimmbaren, minimalen Signal-/Rauschverhältnis der sensorisch ermittelten, für den Ist-Massenstrom ($\dot{m}_{ist}$) an Streugut repräsentativen Regelgröße wieder erreicht oder überschritten wird.

11. Verfahren nach Anspruch 10, **dadurch gekennzeichnet, dass**

- nach Zurückversetzen des Regelgerätes in den Regelmodus oder
- nach Deaktivieren des Steuergerätes zumindest bei der ersten Ermittlung der für die Öffnungsstellung des Dosierorgans repräsentative Stellgröße im Regelmodus ein integrativer Anteil der Regelung, welcher die Abweichung des Ist-Massenstromes ($\dot{m}_{ist}$) an Streugut von dem Soll-Massenstrom ($\dot{m}_{soll}$) an Streugut über die Zeit integriert, auf null gesetzt wird.

12. Verfahren nach Anspruch 10 oder 11, **dadurch gekennzeichnet, dass** wenigstens eine der letzten, für die Öffnungsstellung des Dosierorgans repräsentativen Stellgrößen im Steuermodus gespeichert wird und diese gespeicherte Stellgröße

- nach Zurückversetzen des Regelgerätes in den Regelmodus oder
- nach Deaktivieren des Steuergerätes bei der Ermittlung des für die Öffnungsstellung des Dosierorgans repräsentativen Stellgröße im Regelmodus der Regelung als summarischer Anteil hinzugefügt wird, wobei insbesondere die letzte Stellgröße im Steuermodus oder ein Mittelwert über eine Mehrzahl an letzten Stellgrößen im Steuermodus gespeichert und für den Regelmodus verwendet wird.

13. Verfahren nach Anspruch 12, **dadurch gekennzeichnet, dass** im Regelmodus von dem der Regelung hinzugefügten summarischen Anteil der für die Öffnungsstellung des Dosierorgans repräsentativen, gespeicherten Stellgröße aus dem Steuermodus ein für die Abweichung des Ist-Massenstromes ($\dot{m}_{ist}$) an Streugut von dem Soll-Massenstrom ($\dot{m}_{soll}$) an Streugut zum Zeitpunkt während oder unmittelbar nach

- Zurückversetzen des Regelgerätes in den Regelmodus oder
- Deaktivieren des Steuergerätes

repräsentativer Wert subtrahiert wird.

14. Verfahren nach einem der Ansprüche 1 bis 13, **dadurch gekennzeichnet, dass** zumindest im Regelmodus mit jedem Rechenzyklus eine aktualisierte, für die Öffnungsstellung des Dosierorgans repräsentativen Stellgröße erzeugt wird.

15. Verfahren nach einem der Ansprüche 1 bis 14, **dadurch gekennzeichnet, dass** der aktuelle Betriebszustand (Regel- oder Steuermodus) auf einer Anzeigeeinrichtung angezeigt wird, wobei insbesondere die Dauer der Betriebszustände im Regel- und im Steuermodus ermittelt und auf der Anzeigeeinrichtung angezeigt werden.

16. Scheibenstreuer mit wenigstens einer Verteilerscheibe, welche von einem Antriebsstrang eines Antriebs in Rotation versetzbar ist, und mit wenigstens einem von einem rechnergesteuerten Regelgerät regelbaren Dosierorgan, **dadurch gekennzeichnet, dass** das Regelgerät zur Durchführung eines Verfahrens nach einem der vorangehenden Ansprüche ausgebildet ist.

**Claims**

1. Method for regulating the actual mass flow ($\dot{m}_{actual}$) of spreading material of at least one regulated metering unit of a disc spreader with at least one distribution disc associated with the metering unit, wherein a target mass flow ($\dot{m}_{nominal}$) of spreading material depending on at least one parameter from the group

- current vehicle speed of the disc spreader;
- target spreading quantity per unit area; and
- working width

is determined and said target mass flow ($\dot{m}_{nominal}$) is input to a computer-based regulating device as a reference value, wherein on the one hand at least one sensor-determined controlled variable representative of the actual mass flow ($\dot{m}_{actual}$) from the group

- torque of at least one shaft in a drive train of the distribution disc;
- torsion of at least one shaft in a drive train of the distribution disc;
- pressure difference of a hydraulic motor used to drive the distribution disc; and
- current drain of an electric motor used to drive the distribution disc

is also input to the regulating device and on the other hand the sensor-determined actual revolution rate of the distribution disc or of at least one shaft in the drive train thereof is input to the regulating device, whereupon in a regulating mode of the regulating device the deviation of the actual mass flow ($\dot{m}_{actual}$) of spreading material from the target mass flow ($\dot{m}_{nominal}$) of spreading material is determined and depending on the actual revolution rate of the distribution disc or of the shaft in the drive train thereof an actuating variable representative of the opening position of the metering unit is generated in order to readjust the metering unit to the target mass flow ($\dot{m}_{nominal}$),

**characterized in that**

- while a, in particular predetermined, maximum value of changes of the sensor-determined revolution rate of the distribution discs or of the shaft in the drive train thereof is exceeded

and/or

- while the signal-to-noise ratio of the sensor-determined controlled variable representative of the actual mass flow ($\dot{m}_{actual}$) is below a, in particular predetermined, minimum value,

the regulating device

- is set into a control mode or
- activates a control mode of a control device, wherein in the control mode an actuating variable representative of the opening position of the metering unit is generated independently of the sensor-determined controlled variable that is representative of the actual mass flow ($\dot{m}_{actual}$) in order to control the metering unit of the distribution disc independently of said controlled variable.

2. Method according to Claim 1, **characterized in that** at least one of the last actuating variables representative of the opening position of the metering unit is stored in the regulating mode and said actuating variable is held constant in the subsequent control mode, wherein, in particular,

- the last actuating variable representative of the opening position of the metering unit or
- an average value over a number of the last actuating variables representative of the opening position of the metering unit

is stored in the regulating mode and is used for the control mode.

3. Method according to Claim 1, **characterized in that** the actuating variable representative of the opening position of the metering unit is generated in the control mode depending on a value representative of the physical properties of the respective spreading material, in particular of the fluid properties thereof.

4. Method according to Claim 3, **characterized in that** at least one of the last values representative of the physical properties of the spreading material is stored in the regulating mode and the actuating variable representative of the opening position of the metering unit in the subsequent control mode is generated depending on said stored value, wherein, in particular,

- the last value representative of the physical properties of the spreading material or
- an average value over a number of the last values representative of the physical properties of the spreading material

is stored in the regulating mode and is used for the control mode.

5. Method according to Claim 3 or 4, **characterized in that** the actuating variable representative of the opening position of the metering unit is also generated depending on the target mass flow ($\dot{m}_{nominal}$) used as the reference value, wherein, in particular, the value representative of the physical properties of the spreading material is the reciprocal value of the flow factor, which is defined by the quotient of the target mass flow ($\dot{m}_{nominal}$) used as the reference value divided by the actuating variable representative of the opening position of the metering unit.

6. Method according to any one of the Claims 1 to 5, **characterized in that** the control of the metering unit takes place in the control mode independently of the sensor-determined revolution rate of the distribution disc or of the shaft in the drive train thereof.

7. Method according to any one of the Claims 3 to 6, **characterized in that** the control of the metering unit takes place in the control mode depending on the reciprocal value of at least one of the last flow factors in the regulating mode multiplied by the target mass flow ($\dot{m}_{nominal}$) used as the reference value.

8. Method according to any one of the claims 1 to 7, **characterized in that** the regulation of the actual mass flow ($\dot{m}_{actual}$) takes place in the regulating mode

(a) using a plurality of characteristic curves stored in the regulating device or in a memory associated therewith, which describe the dependency of the actual mass flow ($\dot{m}_{actual}$) on the respective sensor-determined controlled variable representative of the actual mass flow ($\dot{m}_{actual}$) from the group

    - torque of at least one shaft in a drive train of the distribution disc;
    - torsion of at least one shaft in a drive train of the distribution disc;
    - pressure difference of a hydraulic motor used to drive the distribution disc; and
    - current drain of an electric motor used to drive the distribution disc,

for different revolution rates or ranges of revolution rates of the distribution disc or of the shaft in the drive train thereof; or
(b) using at least one mathematical function that describes the dependency of the actual mass flow ($\dot{m}_{actual}$) both on the respective sensor-determined controlled variable representative of the actual mass flow ($\dot{m}_{actual}$) from the group

    - torque of at least one shaft in a drive train of the distribution disc;
    - torsion of at least one shaft in a drive train of the distribution disc;
    - pressure difference of a hydraulic motor used to drive the distribution disc; and
    - current drain of an electric motor used to drive the distribution disc,

and also on the revolution rate of the distribution disc or of the shaft in the drive train thereof.

**9.** Method according to any one of the Claims 1 to 8, **characterized in that** the controlled variable representative of the actual mass flow ($\dot{m}_{actual}$) is determined, in particular at periodic time intervals, by a sensor in no-load mode with the metering unit closed and consequently with an unloaded distribution disc on the one hand, on the other hand with the distribution disc loaded by the actual mass flow ($\dot{m}_{actual}$), wherein the value determined in the no-load mode is subtracted from the total value determined under load in order to determine the difference value caused by the actual mass flow ($\dot{m}_{actual}$) of the spreading material alone, wherein said difference value is input to the regulating device as the at least one sensor-determined controlled variable representative of the actual mass flow ($\dot{m}_{actual}$) from the group

    - torque of at least one shaft in a drive train of the distribution disc;
    - torsion of at least one shaft in a drive train of the distribution disc;
    - pressure difference of a hydraulic motor used to drive the distribution disc; and
    - current drain of an electric motor used to drive the distribution disc.

**10.** Method according to any one of the Claims 1 to 9, **characterized in that** the regulating device

    - is set into the regulating mode again or
    - deactivates the control mode of the control device,

once

    - the, in particular predetermined, maximum value of changes of the sensor-determined revolution rate of the distribution disc or of the shaft in the drive train thereof is reached again or the changes fall below the maximum value
    and/or
    - the, in particular predetermined, minimum signal-to-noise ratio of the sensor-determined controlled variable representative of the actual mass flow ($\dot{m}_{actual}$) of spreading material is reached again or exceeded.

**11.** Method according to Claim 10, **characterized in that**

    - after resetting the regulating device into the regulating mode or
    - after deactivation of the control device at least for the first determination of the actuating variable representative of the opening position of the metering unit in the regulating mode, an integrating component of the regulation, which integrates the deviation of the actual mass flow ($\dot{m}_{actual}$) of spreading material from the target mass flow ($\dot{m}_{nominal}$) of spreading material over time, is set to zero.

12. Method according to Claim 10 or 11, **characterized in that** at least one of the last actuating variables representative of the opening position of the metering unit is stored in the control mode and said stored actuating variable is added as a summary component when determining the actuating variable representative of the opening position of the metering unit in the regulating mode of the regulation

    - after resetting the regulating device into the regulating mode or
    - after deactivation of the control device, wherein, in particular, the last actuating variable in the control mode or an average value over a number of last actuating variables in the control mode is stored and is used for the regulating mode.

13. Method according to Claim 12, **characterized in that** in the regulating mode a value representative of the deviation of the actual mass flow ($\dot{m}_{actual}$) of spreading material from the target mass flow ($\dot{m}_{nominal}$) of spreading material at the point in time during or immediately after

    - resetting the regulating device into the regulating mode or
    - deactivation of the control device is subtracted from the summary component of the stored actuating variable from the control mode that is representative of the opening position of the metering unit and that is added to the regulation.

14. Method according to any one of the Claims 1 to 13, **characterized in that** at least in the regulating mode an updated actuating variable representative of the opening position of the metering unit is generated with each computation cycle.

15. Method according to any one of the Claims 1 to 14, **characterized in that** the current operating state (regulating mode or control mode) is indicated on a display device, wherein, in particular, the durations of the operating states in the regulating mode and in the control mode are determined and indicated on a display device.

16. Disc spreader with at least one distribution disc which is rotationally driven by a drive train of a drive, and with at least one metering unit which is regulatable by a computer-based regulating device, **characterized in that** the regulating device is arranged for carrying out a method according to any one of the preceding claims.


**Revendications**

1. Procédé de régulation du débit massique réel ($m_{ist}$) de produits d'épandage d'au moins un organe de dosage réglable d'un épandeur à disques avec au moins un disque d'épandage associé à l'organe de dosage, un débit massique théorique ($m_{soll}$) de produits d'épandage étant déterminé en fonction d'au moins un paramètre pris dans le groupe composé par :

    - vitesse de conduite actuelle de l'épandeur à disques ;
    - quantité d'épandage théorique par surface ; et
    - largeur de travail ;

et ce débit massique théorique ($m_{soll}$) étant envoyé à un appareil de réglage assisté par ordinateur comme grandeur de pilotage, sachant que l'on fournit en outre à l'appareil de réglage d'une part au moins une grandeur de réglage représentative du débit massique réel ($m_{ist}$), calculée par voie de capteurs, prise dans le groupe :

    - couple de rotation d'au moins un arbre dans une chaîne cinématique du disque d'épandage ;
    - torsion d'au moins un arbre dans une chaîne cinématique du disque d'épandage ;
    - différence de pression d'un moteur hydraulique servant à l'entraînement du disque d'épandage ; et
    - consommation de courant d'un moteur électrique servant à l'entraînement du disque d'épandage ;

et d'autre part la vitesse de rotation réelle calculée par voie de capteurs du disque d'épandage ou d'au moins un arbre dans la chaîne cinématique, à la suite de quoi dans un mode de réglage de l'appareil de réglage, l'écart du débit massique réel ($m_{ist}$) de produits d'épandage par rapport au débit massique théorique de produits d'épandage ($m_{ist}$) est calculé et qu'en fonction de la vitesse de rotation réelle ($m_{ist}$) du disque d'épandage ou de l'arbre dans la chaîne cinématique de celui-ci, une grandeur de commande représentative de la position d'ouverture de l'organe de dosage est générée, pour régler a posteriori l'organe de dosage sur le débit massique théorique ($m_{soll}$) ;

**caractérisé en ce que** :

- lors du passage au-dessus d'une valeur maximale, pouvant notamment être prédéterminée, de variations de la vitesse de rotation calculée par voie de capteurs du disque d'épandage ou de l'arbre dans la chaîne cinématique de celui-ci ; et/ou
- lors du passage en dessous d'un rapport signal/bruit minimal, pouvant notamment être prédéterminé, de la grandeur de réglage représentative du débit massique réel ($m_{ist}$) calculée par voie de capteurs ;
l'appareil de réglage
- est placé dans un mode de commande ; ou
- un mode de commande d'un appareil de commande est activé,

sachant que dans le mode de commande, une grandeur de réglage représentative de la position d'ouverture de l'organe de dosage est générée indépendamment de la grandeur de commande représentative du débit massique réel ($m_{ist}$) calculée par voie de capteurs, pour commander l'organe de dosage du disque d'épandage indépendamment de cette grandeur de réglage.

2.  Procédé selon la revendication 1, **caractérisé en ce qu'**au moins une des dernières grandeurs de commande représentatives de la position d'ouverture de l'organe de dosage est mémorisée dans le mode de réglage et que cette grandeur de commande est maintenue constante dans le mode de commande consécutif, notamment :

    - la dernière grandeur de commande représentative de la position d'ouverture de l'organe de dosage ; ou
    - une valeur moyenne sur une pluralité des dernières grandeurs de commande représentatives de la position d'ouverture de l'organe de dosage ;

    étant mémorisée dans le mode de réglage et utilisée pour le mode de commande.

3.  Procédé selon la revendication 1, **caractérisé en ce que** la grandeur de commande représentative de la position d'ouverture de l'organe de dosage est générée dans le mode de commande en fonction d'une valeur représentative des propriétés physiques du produit d'épandage respectif, notamment de son comportement rhéologique.

4.  Procédé selon la revendication 3, **caractérisé en ce qu'**au moins une des dernières valeurs représentatives des propriétés physiques du produit d'épandage est mémorisée dans le mode de réglage et la grandeur de commande représentative de la position d'ouverture de l'organe de dosage est générée dans le mode de commande consécutif en fonction de cette valeur mémorisée, notamment :

    - la dernière valeur représentative des propriétés physiques du produit d'épandage ; ou
    - une valeur moyenne sur une pluralité des dernières valeurs représentatives des propriétés physiques du produit d'épandage ;

    étant mémorisée dans le mode de réglage et étant utilisée pour le mode de commande.

5.  Procédé selon la revendication 3 ou 4, **caractérisé en ce que** la grandeur de commande représentative de la position d'ouverture de l'organe de dosage est en outre générée en fonction du débit massique théorique ($m_{soll}$) servant de grandeur de pilotage, ledit débit étant notamment la valeur réciproque du facteur rhéologique pour la valeur représentative des propriétés physiques du produit d'épandage, ledit facteur étant défini par le quotient du débit massique théorique ($m_{soll}$) servant de grandeur de pilotage par la grandeur de commande représentative de la position d'ouverture de l'organe de dosage.

6.  Procédé selon l'une quelconque des revendications 1 à 5, **caractérisé en ce que** la commande de l'organe de dosage se produit dans le mode de commande indépendamment de la vitesse de rotation, calculée par voie de capteurs, du disque d'épandage ou de l'arbre dans la chaîne cinématique de celui-ci.

7.  Procédé selon l'une quelconque des revendications 3 à 6, **caractérisé en ce que** la commande de l'organe de dosage se produit dans le mode de commande en fonction de la valeur réciproque d'au moins un des derniers facteurs rhéologiques dans le mode de réglage multiplié par le débit massique théorique ($m_{soll}$) servant de grandeur de pilotage.

8.  Procédé selon l'une quelconque des revendications 1 à 7, **caractérisé en ce que** le réglage du débit massique réel

($m_{ist}$) se produit dans le mode de réglage :

(a) à l'aide d'une pluralité de courbes caractéristiques mémorisées dans l'appareil de réglage ou une mémoire associée à lui, lesdites courbes décrivant la dépendance du débit massique réel ($m_{ist}$) par rapport à la grandeur de réglage représentative du débit massique réel ($m_{ist}$) respective calculée par voie de capteurs, parmi le groupe composé de :

- couple de rotation d'au moins un arbre dans une chaîne cinématique du disque d'épandage ;
- torsion d'au moins un arbre dans une chaîne cinématique du disque d'épandage ;
- différence de pression d'un moteur hydraulique servant à l'entraînement du disque d'épandage ; et
- consommation de courant d'un moteur électrique servant à l'entraînement du disque d'épandage ;

pour différentes vitesses de rotation ou plages de vitesses de rotation du disque d'épandage ou de l'arbre dans la chaîne cinématique de celui-ci ; ou

(b) à l'aide d'au moins une fonction mathématique décrivant la dépendance du débit massique réel ($m_{ist}$) tant par rapport à la grandeur de réglage représentative du débit massique réel ($m_{ist}$) respective calculée par voie de capteurs, parmi le groupe :

- couple de rotation d'au moins un arbre dans une chaîne cinématique du disque d'épandage ;
- torsion d'au moins un arbre dans une chaîne cinématique du disque d'épandage ;
- différence de pression d'un moteur hydraulique servant à l'entraînement du disque d'épandage ; et
- consommation de courant d'un moteur électrique servant à l'entraînement du disque d'épandage ;

que par rapport à la vitesse de rotation du disque d'épandage ou de l'arbre dans la chaîne cinématique de celui-ci.

9. Procédé selon l'une quelconque des revendications 1 à 8, **caractérisé en ce que** la grandeur de réglage représentative du débit massique réel ($m_{ist}$) est calculée par voie de capteurs, d'une part, notamment à intervalles de temps périodiques, en fonctionnement à vide lorsque l'organe de dosage est fermé et par conséquent que le disque d'épandage est non chargé, d'autre part lorsque le disque d'épandage est chargé avec débit massique réel ($m_{ist}$), la valeur calculée en fonctionnement à vide étant soustraite à la valeur totale calculée en charge, pour calculer la valeur de différence provoquée seulement par le débit massique réel ($m_{ist}$) du produit d'épandage, cette valeur de différence étant envoyée à l'appareil de réglage sous la forme de l'au moins une grandeur de réglage représentative du débit massique réel ($m_{ist}$) calculée par voie de capteurs, parmi le groupe composé de :

- couple de rotation d'au moins un arbre dans une chaîne cinématique du disque d'épandage ;
- torsion d'au moins un arbre dans une chaîne cinématique du disque d'épandage ;
- différence de pression d'un moteur hydraulique servant à l'entraînement du disque d'épandage ; et
- consommation de courant d'un moteur électrique servant à l'entraînement du disque d'épandage.

10. Procédé selon l'une quelconque des revendications 1 à 9, **caractérisé en ce que** l'appareil de réglage :

- est de nouveau placé dans le mode de réglage ; ou
- désactive le mode de commande de l'appareil de commande dès que :
- la valeur maximale, pouvant notamment être prédéterminée, des variations de la vitesse de rotation, calculée par voie de capteurs, du disque d'épandage ou de l'arbre dans la chaîne cinématique de celui-ci est de nouveau atteinte ou que l'on passe en dessous d'elle ; et/ou
- le rapport signal/bruit minimal, pouvant notamment être prédéterminé, de la grandeur de réglage représentative du débit massique réel ($m_{ist}$), calculée par voie de capteurs, de produits d'épandage est de nouveau atteint ou dépassé.

11. Procédé selon la revendication 10, **caractérisé en ce que** :

- après réinitialisation de l'appareil de réglage dans le mode de réglage ; ou
- après désactivation de l'appareil de commande ;

une partie intégrative du réglage intégrant dans le temps l'écart du débit massique réel ($m_{ist}$) de produits d'épandage par rapport au débit massique théorique ($m_{soll}$) de produits d'épandage est mise à zéro au moins lors du premier calcul de la grandeur de commande représentative de la position d'ouverture de l'organe de dosage dans le mode de réglage.

**12.** Procédé selon la revendication 10 ou 11, **caractérisé en ce qu'**au moins une des dernières grandeurs de commande représentatives de la position d'ouverture de l'organe de dosage est mémorisée dans le mode de commande et que cette grandeur de commande mémorisée est ajoutée au réglage prenant la forme de la partie sommaire :

- après réinitialisation de l'appareil de réglage dans le mode de réglage ; ou
- après désactivation de l'appareil de commande ;

lors du calcul de la grandeur de commande représentative de la position d'ouverture de l'organe de dosage dans le mode de réglage, la dernière grandeur de commande dans le mode de commande ou une valeur moyenne de la pluralité de dernières grandeurs de commande dans le mode de commande étant notamment mémorisée et utilisée pour le mode de réglage.

**13.** Procédé selon la revendication 12, **caractérisé en ce que** dans le mode de réglage, une valeur représentative est soustraite à la partie sommaire, ajoutée au réglage, de la grandeur de commande mémorisée représentative de la position d'ouverture de l'organe de dosage, à partir du mode de commande, pour l'écart du débit massique réel ($m_{ist}$) de produits d'épandage par rapport au débit massique théorique ($m_{soll}$) de produits d'épandage, au moment même de la :

- réinitialisation de l'appareil de réglage dans le mode de réglage ; ou
- désactivation de l'appareil de commande ;

ou juste après elle.

**14.** Procédé selon l'une quelconque des revendications 1 à 13, **caractérisé en ce qu'**au moins dans le mode de réglage, une grandeur de commande actualisée représentative de la position d'ouverture de l'organe de dosage est produite à chaque cycle de calcul.

**15.** Procédé selon l'une quelconque des revendications 1 à 14, **caractérisé en ce que** l'état de fonctionnement actuel (mode de réglage ou de commande) est affiché sur un dispositif d'affichage, la durée des états de fonctionnement dans le mode de réglage et de commande étant notamment calculée et affichée sur le dispositif d'affichage.

**16.** Épandeur à disques avec au moins un disque d'épandage pouvant être amené en rotation par une chaîne cinématique d'un entraînement et avec au moins un organe de dosage réglable à l'aide d'un appareil de réglage commandé par ordinateur, **caractérisé en ce que** l'appareil de réglage est réalisé de façon à mettre en oeuvre un procédé selon l'une quelconque des revendications précédentes.

Fig. 1 (Stand der Technik)

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19825917 A1
- EP 0963690 A1
- EP 0945548 A2
- EP 1008288 A1
- EP 0982571 A1
- DE 10154737 C1
- DE 102012002585 A1
- EP 0674831 A1